# EUROPEAN PATENT SPECIFICATION

(11) **EP 3 401 148 B1**
(45) Date of publication and mention of the grant of the patent: **14.08.2019**
(21) Application number: 18154462.8
(22) Date of filing: 31.01.2018
(51) Int. Cl.: B60K 35/00, B60K 37/02, B60K 37/06, B62D 1/04, G06F 3/01, G06F 3/041

(54) **VEHICLE CONTROL DEVICE MOUNTED ON VEHICLE AND METHOD FOR CONTROLLING THE VEHICLE**
AUF EINEM FAHRZEUG MONTIERTE FAHRZEUGSTEUERUNGSVORRICHTUNG UND VERFAHREN ZUR STEUERUNG DES FAHRZEUGS
DISPOSITIF DE COMMANDE DE VÉHICULE EMBARQUÉ ET PROCÉDÉ DE COMMANDE DE VÉHICULE

(30) Priority: 11.05.2017 KR 20170058849
(43) Date of publication of application: 14.11.2018
(73) Proprietor: LG Electronics Inc., Yeongdeungpo-gu Seoul 07336 (KR)
(72) Inventor: KIM, Sangwon, 06772 Seoul (KR); KIM, Kyunglack, 06772 Seoul (KR); CHO, Junman, 06772 Seoul (KR); HWANG, Sangroc, 06772 Seoul (KR)
(74) Representative: Vossius & Partner Patentanwälte Rechtsanwälte mbB

(56) References cited:
- DE-A1-102008 004 970
- DE-A1-102015 200 907
- US-A1- 2017 101 111

## Description

The present disclosure relates to a vehicle control device provided in a vehicle and a method for controlling the vehicle.

A vehicle control device comprising the features of the preamble of claim 1 is known from DE 10 2015 200907 A1.

A vehicle is an apparatus capable of moving a user in his or her desired direction, and a representative example may be a car.

Meanwhile, for convenience of a user using a vehicle, various types of sensors and electronic devices are provided in the vehicle. Specifically, a study on an Advanced Driver Assistance System (ADAS) is actively undergoing. In addition, an autonomous vehicle is actively under development.

A vehicle may be provided with various types of lamps. In general, the vehicle includes various vehicle lamps having a lighting function of facilitating articles or objects near the vehicle to be recognized during driving at night, and a signaling function of notifying a driving state of the vehicle to other vehicles or pedestrians.

For example, the vehicle may include devices operating in a manner of directly emitting light using lamps, such as a head lamp emitting light to a front side to ensure a driver's view, a brake lamp turned on when slamming the brake on, turn indicator lamps used upon a left turn or a right turn, and the like.

For another example, reflectors for reflecting light to facilitate the vehicle to be recognized from outside are mounted on front and rear sides of the vehicle.

Installation criteria and standards of the lamps for the vehicle are regulated as rules to fully exhibit each function.

Meanwhile, as the development of the advanced driving assist system (ADAS) is actively undergoing in recent time, development of a technology for optimizing user's convenience and safety while driving a vehicle is required.

In addition, development of various types of vehicle displays formed to facilitate the use of a display unit provided in a vehicle while assisting in a more stable operation through various changes inside the vehicle has been actively carried out.

An object of the present disclosure to provide a vehicle control device capable of manipulating a display while maintaining safety of vehicle driving and a method for controlling the vehicle.

Another object of the present disclosure is to provide a vehicle control device provided with a new type of cluster and a method for controlling the vehicle.

Still another object of the present disclosure is to provide a vehicle control device capable of touching a cluster in an optimized manner and a method for controlling the vehicle.

Yet still another object of the present disclosure is to provide a vehicle control device capable of continuously controlling a function being carried out through a means other than a touch through a cluster and a method for controlling the vehicle.

The object is achieved by the independent claim. Dependent claims refer to preferred embodiments.

Technical problems to be solved in the present disclosure are not restricted to the above-described problems and other technical problems which are not mentioned will definitely be understood by those skilled in the art from the following description.

A vehicle control device according to an embodiment of the present disclosure, as a vehicle control device provided in a vehicle, may include a display unit including a first region and a second region different from the first region, a sensing unit configured to sense that either one of both hands holding a steering wheel is separated from the steering wheel, and a processor configured to activate either one of the first region and the second region so as to enable a touch input based on either one hand being separated from the steering wheel.

According to an embodiment, the display unit may include a main region separated and disposed at a predetermined distance behind the steering wheel, the first region extended in a left direction of the steering wheel in the main region, and the second region extended in a right direction of the steering wheel in the main region.

According to an embodiment, the main region, the first region and the second region of the display unit may form a curved surface, and the first region and the second region may be protruded toward the steering wheel than the main region.

According to an embodiment, the processor may switch the first region from an inactive state to an active state to enable a touch input to the first region when a left hand between the both hands being separated from the steering wheel is sensed through the sensing unit, and switch the second region from an inactive state to an active state to enable a touch input to the second region when a right hand between the both hands being separated from the steering wheel is sensed through the sensing unit

According to an embodiment, touch panels may be superimposed on at least a part of the first region of the display unit and at least a part of the second region of the display unit, respectively, and the processor may switch either one of a touch panel of the first region and a touch panel of the second region from an inactive state to an activated state based on either one hand being separated from the steering wheel.

According to an embodiment, when either one of the both hands is separated from the steering wheel in a state in which a function related to the vehicle is being executed while the both hands hold the steering wheel, the processor may display screen information related to the function in a region activated to enable a touch input between the first and second regions.

According to an embodiment, the processor may control a function related to the vehicle based on a touch input received in a state in which the screen information related to the function is displayed.

According to an embodiment, the processor may sense whether or not a driving state of the vehicle is in a preset state through the sensing unit, and maintain the first region and the second region in an inactive state in which a touch input is disabled when either one of the both hands is separated from the steering wheel in the preset state.

According to an embodiment, the processor may display notification information for notifying the preset state on the display unit when either one of the both hands is separated from the steering wheel in the preset state.

According to an embodiment, the processor may activate either one of the first region and the second region to enable a touch input when the preset state is released in a state in which the either one hand is separated from the steering wheel.

According to an embodiment, the processor may not display screen information related to a function being displayed in the either one region when the preset state is sensed while controlling the function related to the vehicle through the either one region, and redisplay screen information related to the function in a region corresponding to a position of either one hand separated from the steering wheel between the first and second regions when the preset state is released.

According to an embodiment, the processor may activate the either one region to enable a touch input based on whether a predetermined time elapses from a time point when either one of the both hands is away from the steering wheel.

According to an embodiment, the processor may activate the either one region to enable a touch input based on whether either one hand being away from the steering wheel takes a preset gesture in the either one region.

According to an embodiment, the processor may display preset screen information in the either one region between the first region and the second region based on whether the either one region is activated to enable a touch input.

According to an embodiment, the preset screen information may be displayed in the either one region based on a preset type of touch input applied to the either one region subsequent to activating the either one region to enable the touch input.

According to an embodiment, the preset screen information may include a plurality of menu items, and when any one menu item is selected from the plurality of menu items displayed in the either one region, the processor may not display the remaining unselected menu items.

According to an embodiment, when a touch input is received at a portion in which the remaining menu items have been displayed, the processor may redisplay the remaining menu items in the portion.

According to an embodiment, a fingerprint recognition sensor may be provided in a first region and a second region of the display unit, and when either one of the first and second regions is activated to enable a touch input, the processor may switch the fingerprint recognition sensor provided in the activated either one region from an inactive state to an active state.

According to an embodiment, when fingerprint authentication is successful through the fingerprint recognition sensor that has been switched to an active state, the processor may execute a function linked to be carried out when the fingerprint authentication is successful, and control the linked function based on a touch input received at either one region activated to allow the touch input.

The vehicle related to the present disclosure may include the vehicle control device described in this specification.

A control device for a vehicle according to an embodiment of the present disclosure may comprise: a display unit including a first region and a second region, wherein the first region is different from the second region; a sensing unit configured to sense contact, and lack of contact, of first and second hands with a steering wheel of the vehicle; and a processor configured to switch one of the first region or the second region of the display unit from an inactive state to an active state to permit touch input, in response to sensing the lack of contact with the steering wheel of a corresponding one of the first and second hands, wherein the first region corresponds to the first hand and the second region corresponds to the second hand.

Preferably, the display unit further includes a main region that is located behind the steering wheel, such that the steering wheel is located between the main region and a driver's seat of the vehicle. Preferably, the first region extends from a left side of the main region in a leftward direction. Preferably, the second region extends from a right side of the main region in rightward direction.

Preferably, the main region, the first region and the second region of the display unit form a curved surface. Preferably, the first region and the second region are each angled inward relative to a center axis of the steering wheel.

Preferably, the first hand is a left hand of a person and the second hand is a right hand of the person. Preferably, the processor is further configured to switch the first region from the inactive state to the active state to permit touch input to the first region, when the lack of contact with the steering wheel of the first hand is sensed by the sensing unit. Preferably, the processor is further configured to switch the second region from the inactive state to the active state to permit touch input to the second region, when the lack of contact with the steering wheel of the second hand is sensed by the sensing unit.

Preferably, the control device further comprises a first touch panel superimposed on at least a portion of the first region of the display unit; and a second touch panel superimposed on at least a portion of the second region of the display unit. Preferably, the processor is further configured to switch either of the first touch panel or the second touch panel from the inactive state to the active state according to which of the first hand or the second hand has the lack of contact with the steering wheel as sensed by the sensing unit.

Preferably, the processor is further configured to cause the display unit to display screen information of a function related to the vehicle in one of the first region or the second region, in response to sensing the lack of contact with the steering wheel of a corresponding one of the first hand or the second hand.

Preferably, the processor is further configured to control the function related to the vehicle based on a touch input to the display unit received with regard to the displayed screen information.

Preferably, the processor is further configured to identify whether a driving state of the vehicle is in a preset state; and to maintain the first region and the second region in the inactive state in which touch input is disabled to each of the first region and the second region, when the sensing unit senses the lack of contact with the steering wheel of any of the first or second hands and the vehicle is identified as being in the preset state.

Preferably, the processor is further configured to cause the display unit to display notification information notifying of the preset state when the sensing unit senses the lack of contact with the steering wheel of any of the first or second hands and the vehicle is identified as being in the preset state.

Preferably, the processor is further configured to activate either of the first region or the second region to permit the touch input when the preset state is released.

Preferably, the processor is further configured to perform the switch of the one of the first region or the second region of the display unit from the inactive state to the active state based on whether a predetermined time elapses from a time when the lack of contact with the steering wheel is sensed.

Preferably, the processor is further configured to perform the switch of the one of the first region or the second region of the display unit from the inactive state to the active state based on whether either of the first hand or the second hand makes a preset gesture with regard to a respective one of the first region or the second region.

Preferably, the processor is further configured to cause the display unit to display screen information in the activated one of the first region or the second region.

Preferably, the screen information is based on a preset type of touch input received at the activated one of the first region or the second region, wherein the touch input is received after the first region or the second region is switched to the active state.

Preferably, the screen information comprises a plurality of menu items, wherein the processor is further configured to cause the display unit to stop the displaying of unselected menu items of the plurality of menu items when one menu item of the plurality of menu items is selected.

A method of controlling a vehicle having a vehicle control device according to an embodiment of the present disclosure may include sensing that either one of both hands holding a steering wheel is separated from the steering wheel, and activating either one of a first region and a second region on the display unit to enable a touch input based on either one hand being separated from the steering wheel.

The details of other embodiments are included in the detailed description and drawings.

According to an embodiment of the present disclosure, there are one or more following effects.

First, the present disclosure may provide a new user interface capable of setting a touchable region of the display unit in a different manner according to a type of hand placed on the steering wheel.

Second, the present disclosure may provide a display unit (cluster) extended to left and right sides of the steering wheel and protruded toward a driver, thereby providing a vehicle control device and a vehicle capable of touching the cluster even while driving the vehicle.

Third, the present disclosure may provide a new vehicle control method capable of continuously controlling a function being carried out in a manner other than a touch through a cluster using a touchable cluster.

Effects to be achieved in the present disclosure will not be limited to the foregoing effects, and other effects which are not mentioned will become apparent from the following description by a person skilled in the art to which the present disclosure belongs.

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a view illustrating an appearance of a vehicle according to an embodiment of the present disclosure;
FIG. 2 is a view in which a vehicle according to an embodiment of the present disclosure is seen from various angles;
FIGS. 3 and 4 are views illustrating an inside of a vehicle according to an embodiment of the present disclosure;
FIGS. 5 and 6 are views referred to explain an object according to an embodiment of the present disclosure;
FIG. 7 is a block diagram for explaining a vehicle according to an embodiment of the present disclosure;
FIG. 8 is conceptual view for explaining the vehicle control device according to an embodiment of the present disclosure;
FIGS. 9A, 9B and 9C are conceptual views for explaining a display unit according to an embodiment of the present disclosure;
FIG. 10 is a flow chart for explaining a representative control method of the present disclosure; and
FIGS. 11, 12, 13, 14A, 14B, 14C, 15A, 15B, 16A, 16B, 16C, 16D, 16E, 16F, 17 and 18 are a conceptual views for explaining a control method illustrated in FIG. 10.

Description will now be given in detail according to exemplary embodiments disclosed herein, with reference to the accompanying drawings.

In the following description, a left side of a vehicle refers to a left side in a driving direction of the vehicle, and a right side of the vehicle refers to a right side in the driving direction.

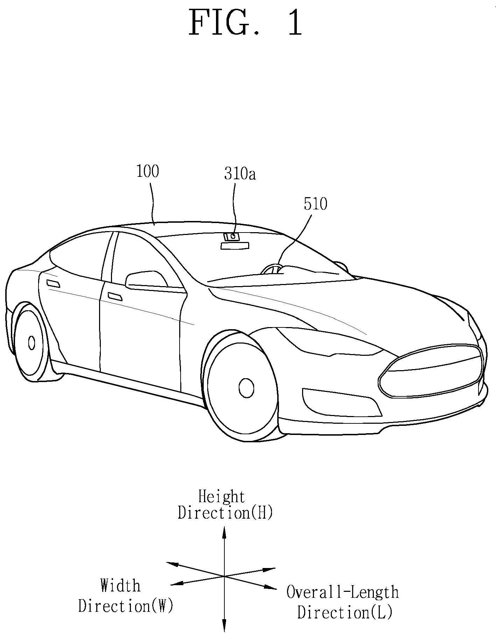

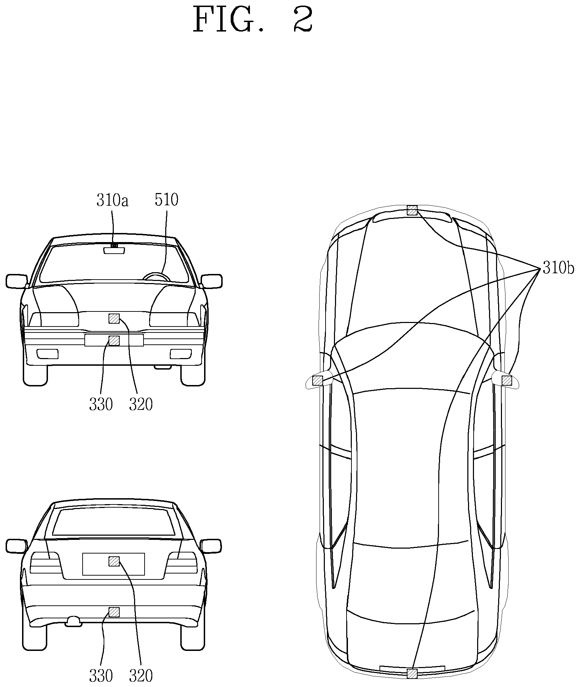

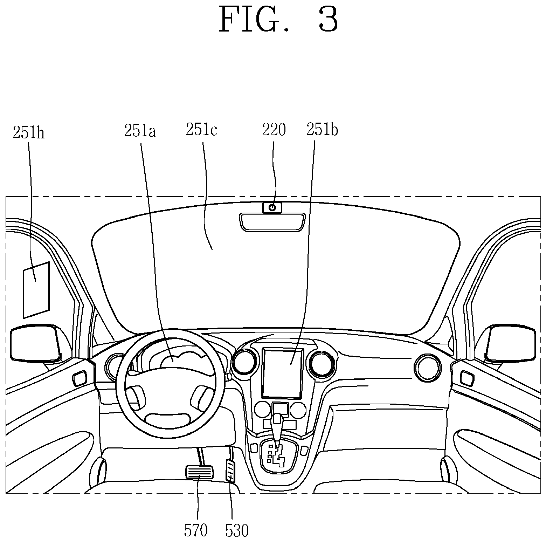

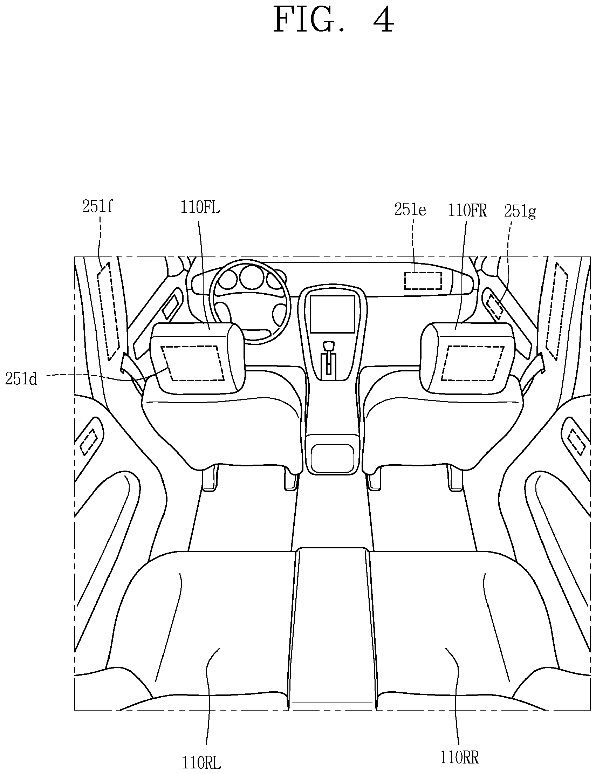

As illustrated in FIG. 1 through 7, a vehicle 100 may include wheels turning by a driving force, and a steering apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle may be converted from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300.

For example, the vehicle 100 may be switched from the manual mode into the autonomous mode or from the autonomous module into the manual mode based on driving environment information generated in the object detecting apparatus 300.

In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700.

For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

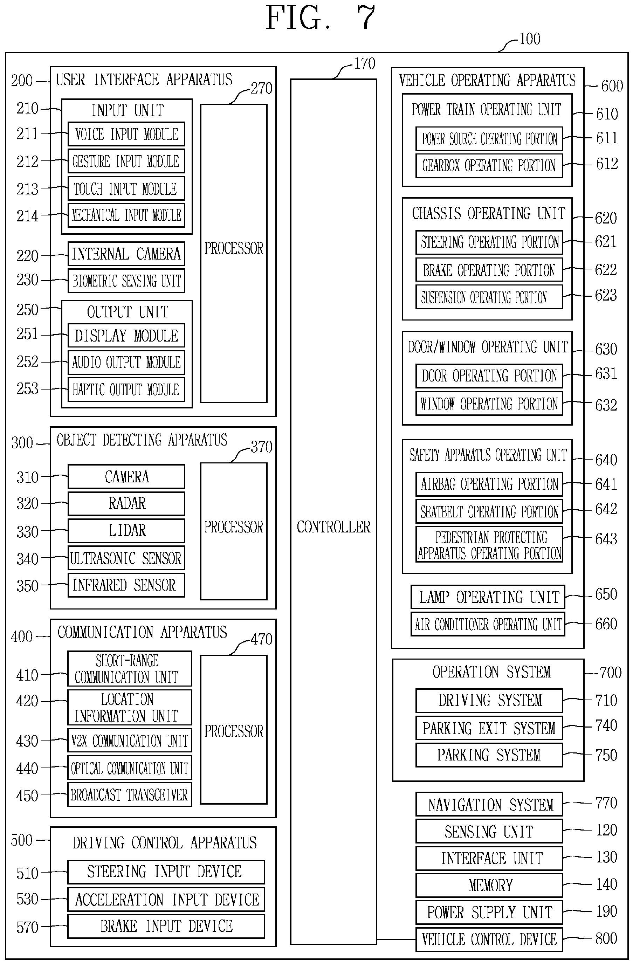

As illustrated in FIG. 7, the vehicle 100 may include a user interface apparatus 200, an object detecting apparatus 300, a communication apparatus 400, a driving control apparatus 500, a vehicle operating apparatus 600, a operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 200 may implement user interfaces (Uls) or user experiences (UXs) through the user interface apparatus 200.

The user interface apparatus 200 may include an input unit 210, an internal camera 220, a biometric sensing unit 230, an output unit 250 and a processor 270.

According to embodiments, the user interface apparatus 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 210 may be disposed within the vehicle. For example, the input unit 200 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170.

The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input.

According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input.

According to an embodiment, the touch input module 213 may be integrated with the display unit 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170.

The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal.

The output unit 250 may include at least one of a display module 251, an audio output module 252 and a haptic output module 253.

The display module 251 may output graphic objects corresponding to various types of information.

The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface apparatus 200 may include a plurality of display modules 251a through 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 converts an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user may recognize such output.

The processor 270 may control an overall operation of each unit of the user interface apparatus 200.

According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle.

The user interface apparatus 200 may operate according to the control of the controller 170.

The object detecting apparatus 300 is an apparatus for detecting an object located at outside of the vehicle 100.

The object may be a variety of objects associated with driving (operation) of the vehicle 100.

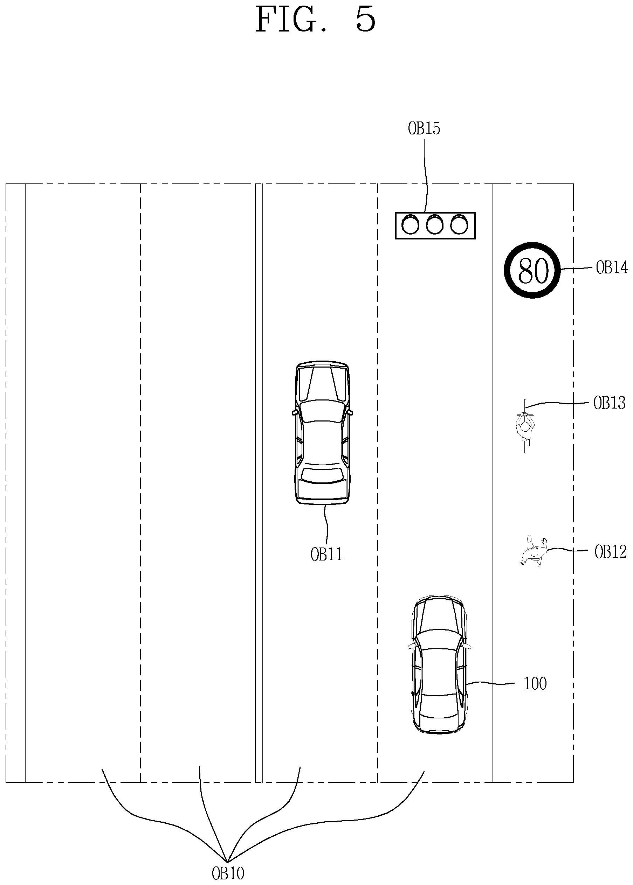

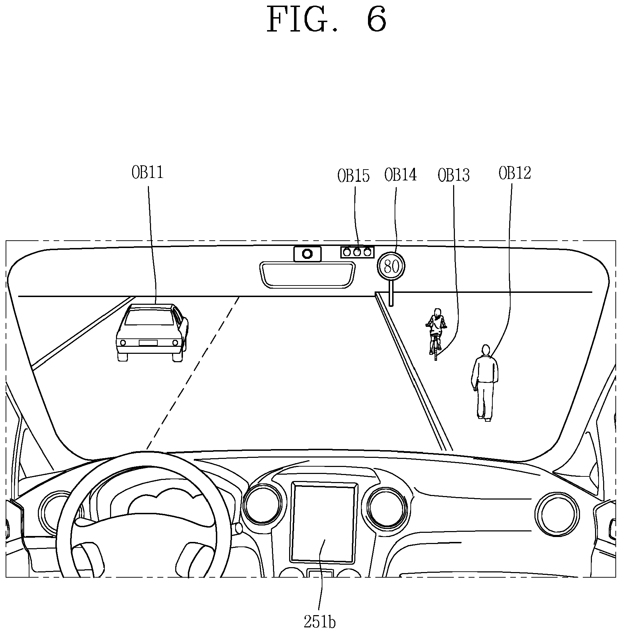

Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a geographical feature, an animal and the like.

The lane OB01 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB13 may refer to a vehicle (transportation facility) that is located near the vehicle 100 and moves using two wheels. The two-wheeled vehicle OB13 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The geographical feature may include a mountain, a hill and the like.

Meanwhile, objects may be classified into a moving object and a fixed object. For example, the moving object may be a concept including another vehicle and a pedestrian. The fixed object may be a concept including a traffic signal, a road and a structure.

The object detecting apparatus 300 may include a camera 310, a radar 320, a LiDAR 330, an ultrasonic sensor 340, an infrared sensor 350 and a processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 300 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. According to some embodiments, the steering input device may also be configured in a shape of a touch screen, a touchpad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. According to some embodiments, the acceleration input device or the brake input device may also be configured in a shape of a touch screen, a touchpad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

Meanwhile, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine may be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis device.

The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include a processor. Each unit of the operation system 700 may individually include a processor.

According to embodiments, the operation system may be a sub concept of the controller 170 when it is implemented in a software configuration.

Meanwhile, according to embodiment, the operation system 700 may be a concept including at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100.

The driving system 710 may receive object information from the object detecting apparatus 300, transmit a control signal to the vehicle operating apparatus 600 and perform driving of the vehicle 100.

The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot.

The parking exit system 740 may receive object information from the object detecting apparatus 300, transmit a control signal to the vehicle operating apparatus 600 and perform the exit of the vehicle 100 from the parking lot.

The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100.

The parking system 750 may receive object information from the object detecting apparatus 300, transmit a control signal to the vehicle operating apparatus 600 and park the vehicle 100.

The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (for example, a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

Meanwhile, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the vehicle 100 according to the present disclosure may include a vehicle control device 800.

The vehicle control device 800 may control at least one of those components illustrated in FIG. 7. From this perspective, the vehicle control device 800 may be the controller 170.

Without a limit to this, the vehicle control device 800 may be a separate device, independent of the controller 170. When the vehicle control device 800 is implemented as a component independent of the controller 170, the vehicle control device 800 may be provided on a part of the vehicle 100.

Hereinafter, description will be given of an example that the vehicle control device 800 is a component separate from the controller 170 for the sake of explanation. In this specification, functions (operations) and control methods described in relation to the vehicle control device 800 may be executed by the controller 170 of the vehicle. In other words, every detail described in relation to the vehicle control device 800 may be applied to the controller 170 in the same/like manner.

Also, the vehicle control device 800 described herein may include some of the components illustrated in FIG. 7 and various components included in the vehicle. For the sake of explanation, the components illustrated in FIG. 7 and the various components included in the vehicle will be described with separate names and reference numbers.

Hereinafter, constituent elements included in the vehicle control device 800 in accordance with one embodiment of the present disclosure will be described in detail with reference to the accompanying drawings.

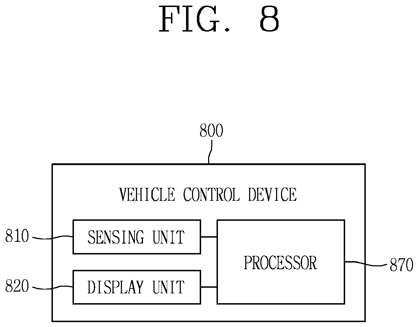

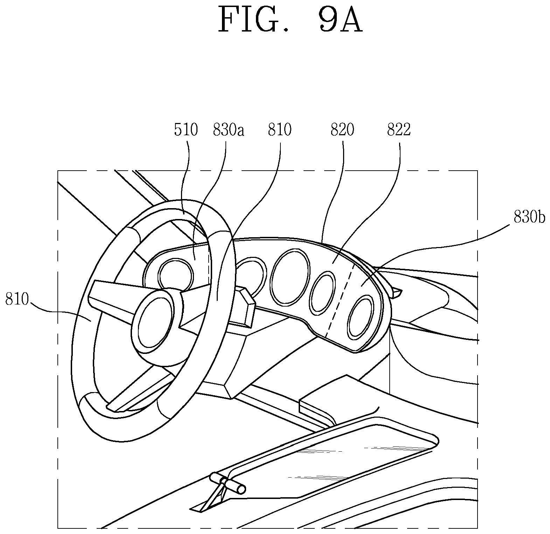

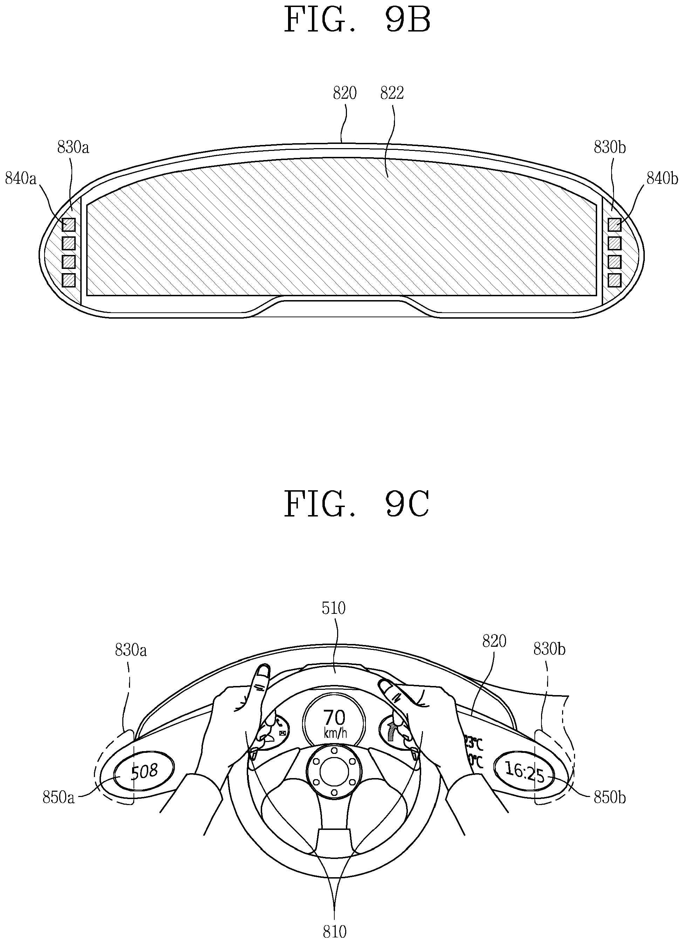

FIG. 8 is a conceptual view for explaining a vehicle control device according to an embodiment of the present disclosure, and FIGS. 9A, 9B and 9C are conceptual views for explaining a display unit according to an embodiment of the present disclosure.

The vehicle control device 800 according to the present disclosure may include a sensing unit 810, a display unit 820, a processor 870, and the like.

The vehicle control device 800 according to the present disclosure may include the sensing unit 810.

The sensing unit 810 may be the object detecting apparatus 300 described in FIG. 7 or the sensing unit 120 provided in the vehicle 100.

In addition, the sensing unit 810 may be an independent sensing unit, or the sensing unit 120 provided in the vehicle 100 may be an independently separated sensing unit. The sensing unit 810 may include the characteristics of the sensing unit 120 or the object device 300 described in FIG. 7 even when the sensing unit 810 is an independent sensing unit.

The sensing unit 810 may include the camera 310 described in FIG 7.

Furthermore, the sensing unit 810 may be implemented in combination with at least two of a camera 310, a radar 320, a line sensor 330, an ultrasonic sensor 340, an infrared sensor 350, a sensing unit 350, an input unit 120, and an input unit 210 (or voice input module 211).

The sensing unit 810 may sense an object existing in the vicinity of the vehicle 100 and sense information associated with the object.

For example, the object may include the above-mentioned nearby vehicle, nearby person, surrounding object, surrounding terrain, and the like.

The sensing unit 810 may sense information associated with the vehicle 100 of the present disclosure.

The information associated with the vehicle may be at least one of vehicle information (or a driving state of the vehicle) and the surrounding information of the vehicle.

For example, the vehicle information may include a driving speed of the vehicle, a weight of the vehicle, a number of passengers in the vehicle, a braking force of the vehicle, a maximum braking force of the vehicle, a driving mode of the vehicle (autonomous driving mode or manual driving mode), a parking mode of the vehicle (autonomous parting mode, automatic parking mode, manual parking mode), whether or not a user gets on the vehicle, and information associated with the user (for example, whether or not the user is an authenticated user), and the like.

The surrounding information of the vehicle may be a state of road surface on which the vehicle is travelling, weather, a distance from a front-side (rear-side) vehicle, a relative speed of a front-side (rear-side) vehicle, a curvature of curve when a driving lane is the curve, an ambient brightness of the vehicle, information associated with an object existing in a reference region (predetermined region) based on the vehicle, whether or not an object enters (or leaves) the predetermined region, whether or not a user exists around the vehicle, and information associated with the user (for example, whether or not the user is an authenticated user), and the like.

Furthermore, the surrounding information (or surrounding environment information) of the vehicle may include external information of the vehicle (for example, ambient brightness, a temperature, a position of the sun, nearby subject (a person, another vehicle, a sign, etc.) information, a type of driving road surface, a landmark, line information, driving lane information), and information required for an autonomous driving/autonomous parking/automatic parking/manual parking mode.

Furthermore, the surrounding information of the vehicle may further include a distance from an object existing around the vehicle to the vehicle 100, a type of the object, a parking space for the vehicle, an object for identifying the parking space (for example, a parking line, a string, another vehicle, a wall, etc.), and the like.

In addition, information related to the vehicle may include information related to driving of the vehicle, whether or not a passenger is present beside the driver of the vehicle, and information related to content displayed on the display unit.

Information related to driving of the vehicle may include a driving mode (normal mode, sport mode, Eco mode, etc.) of the vehicle, a speed of the vehicle, an acceleration/deceleration of the vehicle,

Whether or not a passenger is present beside the driver of the vehicle may be determined (judged) through an image received through the internal camera 220 of the sensing unit 810 or determined (judged) by a DSM (Driver Status Monitoring) system.

The sensing unit 810 may determine (judge) whether a passenger is present beside the driver of the vehicle using a sensor (for example, a pressure sensor or the like) formed on a seat provided in the vehicle.

The information related to content displayed on the display unit may include at least one of a type of content (for example, a video, an image, a graphic object, a web page, various information, etc.), a display format/display size/display ratio, information on whether the content is content linked to bend the display unit, and the like. The information related to the content displayed on the display unit may be sensed by the sensing unit 810 or sensed (detected, judged, determined, extracted) by the processor 870.

Furthermore, the sensing unit 810 of the present disclosure may sense a type of hand of a driver who holds (or grips) a steering wheel (steering input device) 510, a position of hand holding the steering wheel 510, a hand holding the steering wheel 510 being separated from the steering wheel 510 (or releasing a hand of a driver while he or she holds the steering wheel).

Specifically, the sensing unit 810 senses a state in which both hands hold the steering wheel 510 (or a state in which both hands of a driver hold (or contact or apply a predetermined pressure to) the steering wheel 510), either one (left or right hand) of both hands holding the steering wheel 510 being separated from the steering wheel 510, and the like.

For an example, the sensing unit 810 may sense that either one of both hands holding the steering wheel 510 is separated from the steering wheel using a touch sensor, a pressure sensor or the internal camera 220 provided on the steering wheel 510, an infrared sensor provided inside the vehicle, and the like.

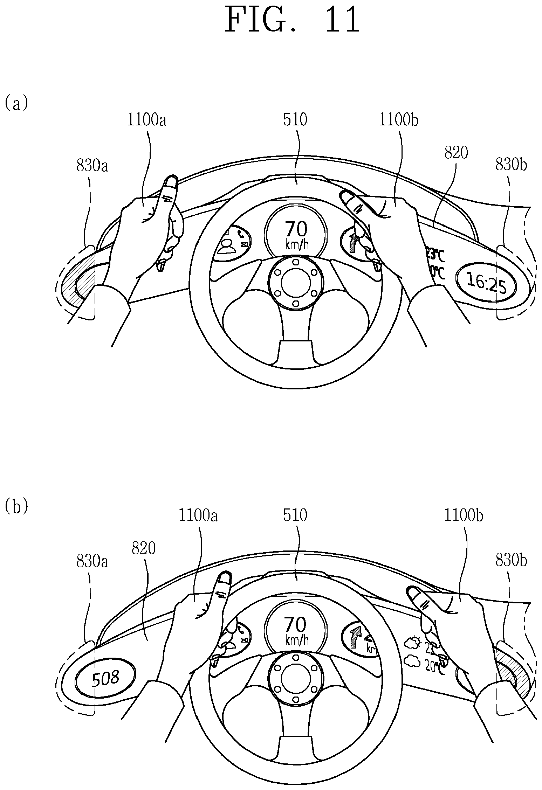

The operation of the sensing unit 810 will be described later in more detail with reference to FIG. 11.

Hereinafter, for the sake of convenience of explanation, an example in which the sensing unit 810 is separately provided in the vehicle control device 800 will be described. The processor 870 acquiring any information through the sensing unit 810 may be understood that the processor 870 acquires any information using at least one of the object detection device 300 provided in the vehicle 100, and the sensing unit 120 and the processor 870 provided in the vehicle 100.

The display unit 820 included in the vehicle control device 800 related to the present disclosure may be the display unit 251 described above as a display apparatus provided in the vehicle 100.

The display unit 820 may be the output unit 250 or display unit 251 illustrated in FIG 7. In addition, the display unit820 may include a transparent display. The transparent display may be attached to a windshield or window.

The display unit 820 includes one region of the steering wheel, one region 251 a, 251 b, 251e of an instrument panel, one region 251d of a seat, one region 251f of each filler, one region 251g of a door, one region of a center console, one region of a head lining, one region of a sun visor, one region 251c of a windshield, and one area 251h of the window.

For example, the display unit 820 may include a cluster, a center information display (CID), a navigation device, and a head-up display (HUD), and the like.

The processor 870 may display information related to various vehicles on the display unit 820. In addition, the processor 870 may display information related to the vehicle on a different position of the display unit 820 according to a type of the information related to the vehicle.

Furthermore, as illustrated in FIG. 9A, the display unit 820 of the present disclosure may be provided in a region of an instrument panel (or a dashboard), and formed to display (provide) content (for example, speed meter value, RPM meter, information related to a function being executed in the vehicle, navigation information, etc.) to a driver and/or a passenger.

As illustrated in FIG. 9A, the display portion 820 of the present disclosure may be a cluster. The display unit 820 may be disposed to be spaced a predetermined distance from in rear of the steering wheel 510 (or in a forward direction of the vehicle 100 with respect to the steering wheel).

The display unit 820 may be formed in a bent shape (curved shape) such that left and right sides of the display unit 820 are bent toward the steering wheel 510 (or the driver). In other words, the display unit 820 may have a curved surface, and the center of a curvature of the display unit 820 may be located at a driver side (or at a rear side of the vehicle with respect to the display unit 820).

The display unit 820 of the present disclosure may include a first region 830a and a second region 830b different from the first region 830a. The first region 830a and the second region 830b may be spaced apart from each other.

Specifically, the display unit 820 may include a main region 822, a first region 830a extended to the left of the main region, and a second region 830b extending to the right of the main region.

The main region 822 of the display unit 820 may be spaced a predetermined distance behind the steering wheel 820. Here, a rear side of the steering wheel 820 may denote a front side (L) of the vehicle. The main region 822 may be curved at least partially so that the curvature center is present on the driver's side.

The first region 830a of the display unit 820 may be extended in a left direction of the steering wheel from the main region 822. In addition, the first region 830a may denote a left region (or a left side) of the display unit 820. Referring to FIG. 9C, the first region 830a of the display unit 820 may denote a region that is seen from a place out of the left side of the steering wheel 510 when the display unit 820 is viewed from the driver's standpoint. Furthermore, the first region 830a may be protruded toward the steering wheel 510 (or toward the driver or a rear side of the vehicle) with respect to the main region 822.

The first region 830a may be a region adjacent to a left edge of the display unit 820.

The second region 830b of the display unit 820 may be extended in a right direction of the steering wheel from the main region 822. In addition, the second region 830b may denote a right region (or a right side) of the display unit 820. Referring to FIG. 9C, the second region 830b of the display unit 820 may denote a region that is seen from a place out of the right side of the steering wheel 510 when the display unit 820 is viewed from the driver's standpoint. Furthermore, the second region 830b may be protruded toward the steering wheel 510 (or toward the driver or a rear side of the vehicle) with respect to the main region 822.

The second region 830b may be a region adjacent to a right edge of the display unit 820.

The left and right sides of the display unit 820 described in this specification may be defined based on a state in which the driver (user) looks at the display unit 820. In other words, as illustrated in FIG. 9C, the first region 830a of the display unit 820 may be a region existing on the left side when the driver looks at the display unit 820, and the second region 830b of the display unit 820 830b may be a region existing on the right side when the driver looks at the display portion 820.

Referring to FIG. 9A, the main region 822, the first region 830a, and the second region 830b of the display unit 820 of the present disclosure may form a curved surface, and the first region 820a and the second region 830b may be further protruded toward the steering wheel 510 than the main region 822. Specifically, the display unit 820 may be spaced a predetermined distance from the steering wheel 510 to form a curved surface so as to surround the steering wheel 510. Accordingly, a distance to the first region 830a adjacent to a left edge of the display unit 820 and the second region 830b adjacent to a right edge of the display unit 820 from the driver (user) may be disposed closer to each other than the main region 822.

Each of the main region 822, the first region 830a, and the second region 830b of the display unit 820 of the present disclosure may include at least a flat region.

The first region 830a and the second region 830b may be symmetrical with respect to the main region 822 of the display unit 820. However, the present disclosure is not limited to this, and the first region 830a and the second region 830b may be formed asymmetrically with respect to the main region 822.

Through the foregoing configuration, the present disclosure may provide a cluster capable of allowing the driver to more easily manipulate (touch) at least one of the first region 830a and the second region 830b of the display unit 510 with his or her hand placed on the steering wheel 510.

The display unit 820 of the present disclosure may include touch panels 840a, 840b on at least part thereof.

For example, as illustrated in FIG. 9B, the touch panels 840a, 840b may be provided on at least a part of the first region 830a of the display portion 820 and at least a part of the second region 830b thereof.

The touch panels 840a, 840b may be provided to correspond to the entire first region and the second region or may include only a part of each of the first region and the second region.

For an example, when the touch panels 840a, 840b are provided only in a part of each of the first region 830a and the second region 840b, the touch panels 840a, 840b may be disposed in a region adjacent to a left edge of the display unit 820 (a part of the first region) and a region adjacent to a right edge of the display unit 820 (a part of the second region).

In this case, each of the first region 830a and the second region 830b may include a touchable region and a non-touchable region.

On the contrary, when the touch panels 840a, 840b are provided to correspond to the entire first region 830a and second region 830b, both the first region 830a and the second region 830b are formed to be touchable.

The content that a touch input is received at either one of the first region 830a and the second region 830b described in the present specification may be understood that a touch input is received at the touch panels 840a, 840b provided in either one of the first and second regions 830a, 830b without distinguishing between a case where the touch panels 840a, 840b are provided to correspond to the entire first and second regions 830a, 830b and a case where the touch panels 840a, 840b are provided to correspond to only a part of the first and second regions 830a, 830b, respectively.

On the other hand, as illustrated in FIG. 9B, the display unit 820 of the present disclosure may include a light emitting device that emits light, and for an example, the light emitting device may be provided to be superimposed on the first region 830a and the second region 830b (or touch panels 840a, 840b).

The light emitting device may be used to notify that at least one of the first region 830a and the second region 830b is activated to enable a touch input or used to guide a touchable region or used to display a menu corresponding to a preset function. For an example, when at least one of the first region 830a and the second region 830b is activated to enable a touch input, the processor 870 may emit a light emitting device superimposed on the activated region to notify it.

All information 850a, 850b displayable on the vehicle control device 800 (or the vehicle 100) may be displayed in the first region 830a and the second region 830b of the display unit 820 of the present disclosure as illustrated in FIG. 9C. Information displayable in the first region 830a and the second region 830b will be described later in detail with reference to the accompanying drawings.

Returning back to FIG. 8, the vehicle control device 800 of the present disclosure may include the processor 870 capable of controlling the sensing unit 810, the display unit 820, and the like.

The processor 870 may be the controller 170 described with reference to FIG. 7.

The processor 870 may control the constituent elements described in FIG. 7 and the constituent elements described in FIG. 8.

The processor 870 may sense that one of the both hands holding the steering wheel 510 is separated from the steering wheel 510 through the sensing unit 810. In other words, the processor 870 may sense (determine, judge, extract, detect) which one of the both hands the driver holds the steering wheel 510 is released through the sensing unit 810.

Then, the processor 870 may activate either one of the first region 830a and the second region 830b of the display unit 820 to enable a touch based on whether the either one hand is separated from the steering wheel 510.

Specifically, the processor 870 may not always maintain the first region 830a and the second region 830b of the display unit 820 in a touchable state, and activate either one of the first region 830a and the second region 830b of the display unit 820 in a touchable state based on a hand being separated from the steering wheel 510.

Through the foregoing configuration, power applied to a touch panel to enable a touch input may be saved, there by havening an effect of minimizing battery power consumption.

Hereinafter, various embodiments for controlling the display unit 820 of the present disclosure in an optimized manner will be described in more detail with reference to the accompanying drawings.

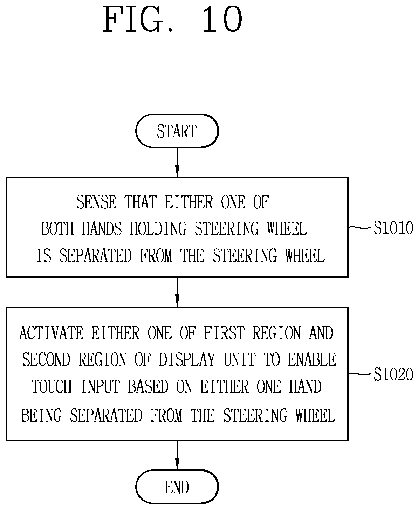

FIG. 10 is a flow chart for explaining a representative control method of the present disclosure, and FIGS. 11, 12, 13, 14A, 14B, 14C, 15A, 15B, 16A, 16B, 16C, 16D, 16E, 16F, 17 and 18 are a conceptual views for explaining a control method illustrated in FIG. 10.

First, the processor 870 of the present disclosure may sense whether or not the driver holds both hands on the steering wheel 510 through the sensing unit 810. For an example, the processor 870 may sense whether or not the driver holds both hands on the steering wheel 510 through the sensing unit 810 while driving the vehicle 100.

For an example, the first region 830a and the second region 830b of the display unit 820 may be in an inactive state in which a touch input is disabled when the vehicle is driving.

For another example, the processor 870 may deactivate the first and second regions 830a, 830b not to enable a touch input to the region 830a and the second region 830b when the vehicle is in a driving state or in a state where both hands of the driver hold the steering wheel 510 (or both conditions are satisfied).

Then, referring to FIG. 10, according to the present disclosure, the process of sensing that either one of the both hands holding the steering wheel is separated from the steering wheel 510 is carried out (S1010).

Specifically, the processor 870 may sense that either one of the both hands (the left or the right hand) holding the steering wheel 510 is separated from the steering wheel 510 through the sensing unit 810 in a state in which both hands of the driver hold the steering wheel 510.

The vehicle control device 800 of the present disclosure may determine (judge, extract, sense, detect) whether or not the steering wheel 510 is held by both hands, whether or not either one of the both hands holding steering wheel 510 is separated from the steering wheel, and whether or not the either one hand is a left or right hand in various ways.

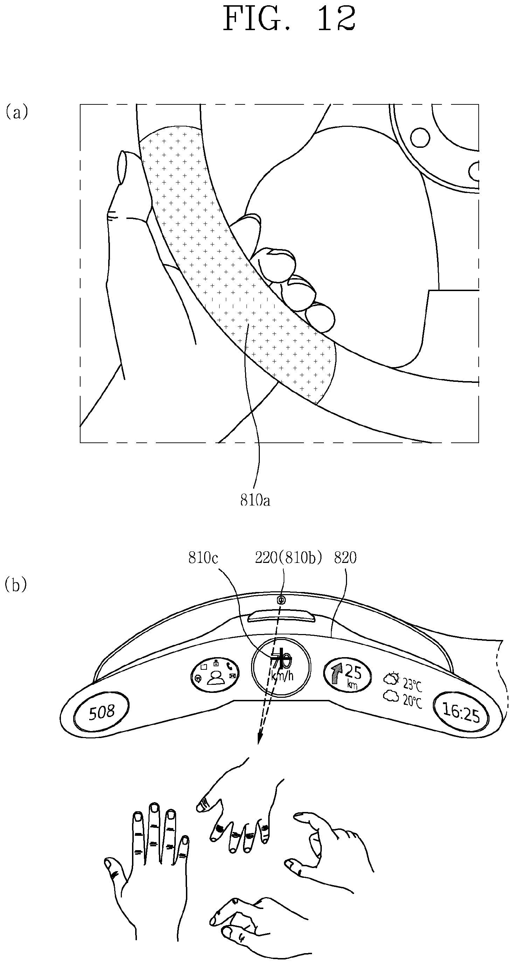

Referring to FIG. 12A, the sensing unit 810 of the present disclosure may include a touch sensor 810a or a pressure sensor provided on at least a part of the steering wheel 510. For an example, at least a part of the steering wheel 510 may be a portion of a handle (or ring) formed to hold the steering wheel 510 by the driver.

The processor 870 may sense whether or not the driver holds the steering wheel 510 using the touch sensor 810a or the pressure sensor, whether or not the steering wheel 510 is held by both hands, whether or not either one of the both hands holding the steering wheel 510 is separated from the steering wheel 510, whether or not the either one hand is a left or right hand, and the like.

Furthermore, referring to FIG. 12B, the sensing unit 810 of the present disclosure may include internal cameras 220, 810b. The internal camera 810b may be disposed to photograph an inside of the vehicle (for example, a driver).

The processor 870 may sense whether or not whether or not the steering wheel 510 is held by both hands, whether or not either one of the both hands holding the steering wheel 510 is separated from the steering wheel 510, whether or not the either one hand is a left or right hand, and the like based on an image photographed through the internal camera 810b.

Furthermore, the processor 870 may sense (determine, judge, extract, detect) a user gesture taken by a hand placed on the steering wheel 510 based on an image photographed through the internal camera 810b.

The internal camera 810b may be a ToF (Time of Flight) sensor.

Furthermore, referring to FIG. 12B, the sensing unit 810 of the present disclosure may include an infrared sensor 810c. The infrared sensor 810c may be formed to emit infrared rays, and sense an object based on infrared rays reflected from the object, and sense the position, shape, movement, gesture and the like of the object. The infrared sensor 810c may be referred to as an infrared proximity sensor, and may be provided in at least a part of the display unit 820 of the present disclosure.

The processor 870 may sense whether or not whether or not the steering wheel 510 is held by both hands, whether or not either one of the both hands holding the steering wheel 510 is separated from the steering wheel 510, whether or not the either one hand is a left or right hand, a user gesture taken by a hand placed on the steering wheel 510 and the like based on the infrared sensor 810c. In this specification, in addition to the infrared sensor 810c, an ultrasonic sensor, a lidar, a radar, or the like may also be used.

The touch sensor 810a, the pressure sensor, the internal camera 810b, the ToF sensor, the infrared sensor 810c, the ultrasonic sensor, the lidar, the radar, and the like included in the foregoing sensing unit 810 are typically used sensors, and thus the detailed description of their operation methods will be omitted.

Returning back to FIG. 10, hereinafter, according to the present disclosure, the process of activating either one of the first region 830a and the second region 830b of the display unit 820 to enable a touch input based on whether either one hand is separated from the steering wheel 510 is carried out.

Specifically, when it is sensed a state in which both hands hold the steering wheel 510 through the sensing unit 810, the processor 870 may deactivate the first region 830a and the second region 830b of the display unit 820 to disable a touch input (or touch).

At this time, when either one hand is separated from the steering wheel 510, the processor 870 may switch either one of the first region 830a of the display unit 820 from an inactive state to an active state to enable a touch input based on the type of the separated either one hand.

Here, activating either one of the first region 830a and the second region 830b of the display unit 820 may denote applying power to a touch panel to enable a touch input (or touch) to the either one region or entering a state in which a touch input (touch) to the either one region is enabled.

On the contrary, deactivating the first region 830a and the second region 830b of the display unit 820 may denote not applying power to a touch panel to disable a touch input (or touch) to the first and second regions 830a, 830b (or to ignore a touch input (or touch) received at the first and second regions 830a, 830b), ignoring a touch input (or touch) received at the first and second regions 830a, 830b, or entering a state in which a touch input (or touch) to the second regions 830a, 830b is disabled.

Whether or not to activate/deactivate the first region 830a and the second region 830a of the display unit 820 may be regardless of the display of information. In other words, it should be understood that activation/deactivation in this specification determines whether to enable or disable a touch input (or recognize or ignore a touch input), and whether to display or not to display any information may be regardless of activation/deactivation.

For example, when the first region 830a (or the second region 830b) of the display unit 820 is in an inactive state, any information may be displayed or not be displayed in the first region 830a (or the second region 830b).

For another example, when the first region 830a (or the second region 830b) of the display unit 820 is in an active state, any information may be displayed or not be displayed in the first region 830a (or the second region 830b).

On the other hand, the processor 870 provided in the vehicle control device 800 of the present disclosure may determine either one region between the first region 830a and the second region 830b of the display unit 820 to be activated to enable a touch input based on the type of either one hand between both hands holding the steering wheel 510 being separated from (placed on) the steering wheel 510.

For example, as illustrated in FIG. 11A, when the left hand 1100a of the both hands is separated from the steering wheel 510 through the sensing unit 810, the processor 870 may switch the first region 830a from an inactive state to an active state to enable a touch input to the first region 830a adjacent to a left edge of the display unit 820.

For another example, as illustrated in FIG. 11B, when the right hand 1100b of the both hands is separated from the steering wheel 510 through the sensing unit 810, the processor 870 may switch the second region 830b from an inactive state to an active state to enable a touch input to the second region 830a adjacent to a right edge of the display unit 820.

As described above, the touch panels 840a, 840b may be superimposed on at least a part of the first region 830a of the display unit 820 and at least a part of the second region 830b of the display unit 820, respectively.

The processor 870 may switch either one of the touch panel 840a provided in the first region 830a and the touch panel 840b provided in the second region 830b from an inactive state to an activated state based on either one hand (left or right hand) being separated from the steering wheel 510.

Here, activating the touch panels 840a, 840b may denote applying power (or a voltage, a current) to the touch panel 840a, 840b to enable a touch input (or recognize a touch input) to the first region 830a or the second region 830b.

Furthermore, deactivating the touch panels 840a, 840b may denote not applying power (or a voltage, a current) to the touch panel 840a, 840b to disable a touch input to the first region 830a or the second region 830b or ignore (or not recognize) a touch input received at the first region 830a or the second region 830b.

For example, when the left hand 1100a of both hands holding the steering wheel 510 is separated from the steering wheel 510, the processor 870 may activate the touch panel 840a superimposed on the first region 830a of the display unit 820 (a region adjacent to a left edge of the display unit).

For another example, when the right hand 1100b of both hands holding the steering wheel 510 is separated from the steering wheel 510, the processor 870 may activate the touch panel 840a superimposed on the second region 830b of the display unit 820 (a region adjacent to a right edge of the display unit).

The above-described operation (function, control method, etc.) may be based on the assumption that the vehicle is driving. For an example, when the vehicle is not driving (for example, when the vehicle is stationary), the processor 870 may activate the first and second regions 830a, 830b of the display unit 820 to enable a touch input to both the first and second regions 830a, 830b.

The first region 830a adjacent to a left edge of the display unit 820 may be a preset region as a region activated to enable a touch input when the left hand 1100a is separated from the steering wheel 510.

Furthermore, the second region 830b adjacent to a right edge of the display unit 820 may be a preset region as a region activated to enable a touch input when the right hand 1100b is separated from the steering wheel 510.

On the other hand, when it is sensed that both hands holding the steering wheel 510 is separated from the steering wheel 510 while driving the vehicle, the processor 870 may deactivate both the first and second regions 830a, 830b of the display unit 820 to disable a touch input. At this time, the processor 870 may display notification information for guiding to hold the steering wheel 510 on the display unit 820. It is to prevent the steering wheel from being released to touch the first region and the second region of the display unit 820 at the same time while driving the vehicle so as to secure the stability of vehicle operation.

Furthermore, when either one of the first and second regions 830a, 830b is activated to enable a touch input as either one hand is separated from the steering wheel 510, the processor 870 may display notification information for notifying this on the display unit 820.

At this time, the notification information may be carried out through lighting of the light emitting device described above or may be carried out through a separate notification window.

In addition, the notification information may be displayed in a region activated to enable a touch input (or adjacent to the activated region) between the first and second regions 830a, 830b.

Through the foregoing configuration, the present disclosure may provide a new user interface capable of switching either one of the first and second regions 830a, 830b of the display unit 820 to enable a touch input according to the type of a hand (left or right hand) separated from the steering wheel 510.

Hereinafter, with reference to the accompanying drawings, various embodiments in which a display unit (cluster) provided at a rear side of the steering wheel and protruded (flexed, bent) toward the steering wheel while being extended to get out of the left and right sides of the steering wheel is used in an optimized manner will be described in more detail.

The processor 870 may execute a function related to the vehicle by a user request while holding the steering wheel 510 with both hands. A function related to the vehicle may include all types of functions that can be carried out in the vehicle control device 800 (or vehicle 100).

For an example, the function related to the vehicle may include various function such as a function of controlling a temperature inside the vehicle, a function of playing music or video, a function of streaming broadcast, a function of controlling a volume, a function of performing communication with another vehicle or an external device through vehicle-to-everything (V2X) communication, a function of adjusting a display brightness of the display unit 820, a function of adjusting a strength of vehicle suspension, and a function of setting/displaying route information (or driving route).

The function related to the vehicle may be carried out in various ways. For example, the processor 870 may receive the user's voice through a microphone (or the sensing unit 810) provided in the vehicle, and execute a function related to the vehicle corresponding to the received voice.

For another example, the processor 870 may perform a function related to the vehicle based on a user input received through a manipulation button (not shown) provided on the steering wheel 510 (or a door/instrument board (dashboard) in the vehicle) or perform a function related to the vehicle based on a user input received through a separate display (for example, a center information display (CID) or a navigation system) provided inside the vehicle.

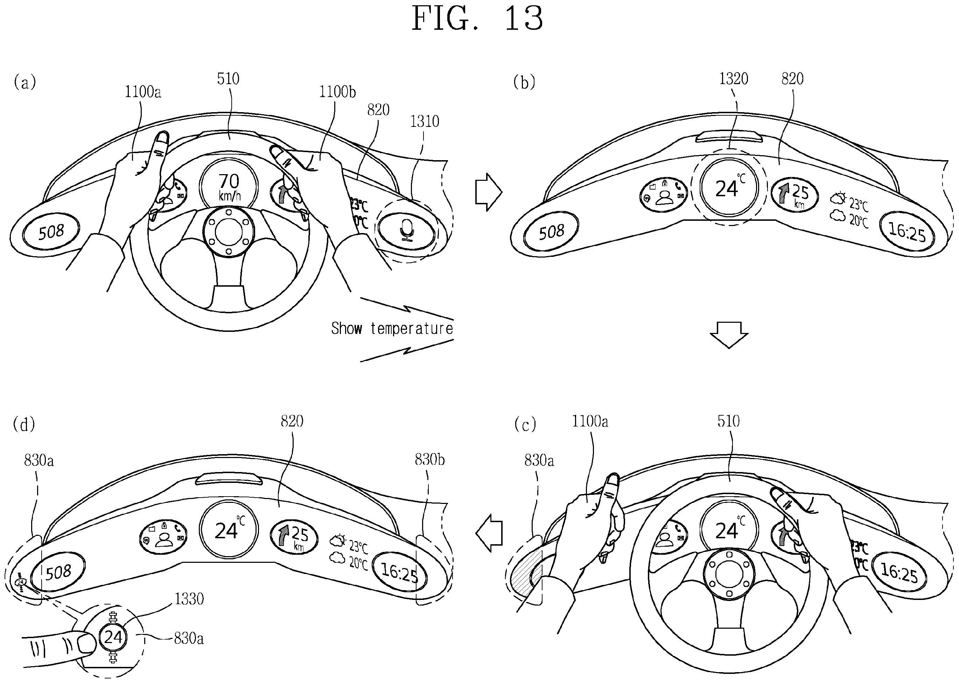

FIG. 13A shows an example in which a function related to the vehicle is executed based on the user's voice. As illustrated in FIG. 13A, the processor 870 may execute a function related to the vehicle corresponding to a user's voice, based on the user's voice.

For example, when a function for inputting the user's voice is executed by the user's request, the processor 870 may display information 1310 corresponding to the function on the display unit 820.

In this state, when a function related to the vehicle is executed by the user's voice, the display unit 820 may display an execution screen 1310 of a function related to the executed vehicle as illustrated in FIG. 13B.

The processor 870 may sense that either one of both hands 1100a is separated from the steering wheel 510 in the state that the function related to the vehicle is being executed while the steering wheel 510 is held by the both hands as illustrated in FIG. 13C.

In this case, the processor 870 may activate either one of the first region 830a and the second region 830b of the display unit 820 to enable a touch input.

Here, when the hand separated from the steering wheel 510 is the right hand, a region to be activated to enable the touch input may be the second region 830b adjacent to a right edge of the display unit 820.

Furthermore, as illustrated in FIG. 13C, when the hand separated from the steering wheel 510 is the left hand 1100a, a region activated to enable the touch input is the first region 830a adjacent a left edge of the display unit 820.

In addition, the processor 870 may display screen information 1330 related to the function being executed in the activated either one region.

In summary, when either one (for example, left hand 1100a) of both hands is separated from the steering wheel 510 in the state that a function related to the vehicle is being executed while the steering wheel 510 is held by both hands, the processor 870 may display screen information 1330 related to the function in the first region 830a when the either one hand is the left hand 1100a, and display screen information 1330 related to the function in the second region 830b when the either one hand is the right hand 1100b, which is a region activated to enable a touch input between the first region 830a and the second region 830b of the display unit 820.

The processor 870 may control a function related to the vehicle based on a touch input received in a state in which screen information 1330 related to the function is displayed as illustrated in FIG.13D.

For example, the screen information 1330 related to the function may denote an interface screen, a control bar, or the like capable of manipulating a function related to the vehicle. The screen information 1330 related to the function may be displayed in a region activated to enable a touch input.

The region activated to enable the touch input may be the first region 830a when the hand separated from the steering wheel 510 is the left hand 1100a, and may be the second region 830b when the hand separated from the steering wheel 510 is the right hand 1100b.

In addition, the screen information 1330 related to the function may vary according to the type of the function related to the vehicle being executed. For example, when the function related to the vehicle is a first function, screen information related to the function may be first screen information, and when the function related to the vehicle is a second function different from the first function, screen information related to the function may be second screen information different from the first screen information.

For example, when a function for setting a temperature inside the vehicle is being executed while the steering wheel 510 is held by both hands as illustrated in FIG. 13A, an execution screen 1320 of a function indicating a currently set temperature may be displayed as illustrated in FIG. 13B.

At this time, when either one (for example, left hand 1100a) of the both hands holding the steering wheel 510 is separated therefrom, the processor 870 may display screen information 1330 related to the function capable of controlling the function in a region (for example, first region 830a) existing in a direction corresponding to the separated hand between the first region 830a and the second region 830b of the display unit 820.

Then, the processor 870 may control the function related to the vehicle being executed based on a touch input received at a region activated to enable the touch input by the separated either one hand 1100a in a state in which the screen information 1330 related to the function is displayed.

For an example, when the function related to the vehicle is a function for setting a temperature inside the vehicle, the processor 870 may change a setting temperature inside the vehicle in response to a drag touch input received at a region activated to enable the touch input.

Though not shown in the drawing, when either one of both hands holding the steering wheel is separated from the steering wheel while the function associated with the vehicle is being executed by a manipulation button provided on the steering wheel, the processor 870 may display screen information related to the function being executed in a region corresponding to a direction of the separated either one hand.

Through the foregoing configuration, the present disclosure may provide a new user interface capable of continuously controlling (manipulating) a function being executed prior to being activated to enable a touch input on the display unit through the touch input.

On the other hand, when a driving state of the vehicle is a preset state, the processor 870 of the present disclosure may maintain the first region 830a and the second region 830b of the display unit 820 in an inactive state in which a touch input is disabled even when either one of both hands holding the steering wheel 510 is separated from the steering wheel 510.

Specifically, the processor 870 may sense whether or not the driving state of the vehicle is in a preset state through the sensing unit 810. Here, the preset state may denote a state in which there exist a risk of driving such as when a driving speed of the vehicle is above a predetermined speed, when the steering wheel 510 is rotated by a predetermined angle or more (in other words, a steering direction of the vehicle is shifted by a predetermined angle or more), when the vehicle is driving a curved road, when an object (for example, a person, another vehicle, a building, an obstacle, etc.) is sensed within a predetermined distance from the vehicle, or the like.

The preset state may be set by the user, preset at the time of manufacture of the vehicle control device (or vehicle) or may be changed by the user.

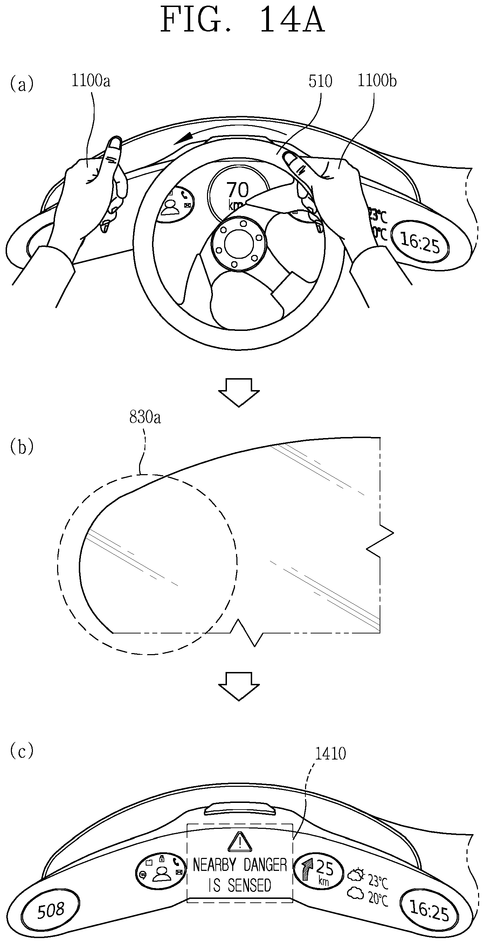

When either one (for example, left hand 1100a) of both hands holding the steering wheel 510 is separated from the steering wheel 510 while a driving state of the vehicle is in a preset state (for example, the steering wheel is shifted by a predetermined angle or more) as illustrated in FIG. 14A(a), the processor 870 may maintain the first region 830a and the second region 830b of the display unit 820 in an inactive state in which a touch input is disabled as illustrated in FIG. 14A(b).

Furthermore, as illustrated in FIG. 14A(c), when either one of the both hands holding the steering wheel 510 is separated from the steering wheel 510 in a preset state, the processor 870 may display notification information 1410 (or notification information indicating that a touch input is disabled in the first and second regions 830a, 830b or notification information for guiding the steering wheel to be held with both hands) on the display unit 820 (for example, the main region of the display unit 820).

Through the foregoing configuration, even though either hand of both hands holding the steering wheel 510 is separated from the steering wheel 510, when the driving state of the vehicle is in a preset state (when there is a risk of driving), the present disclosure may provide a user interface capable of limiting a touch to the display unit 820 to maintain the stability of the operation.

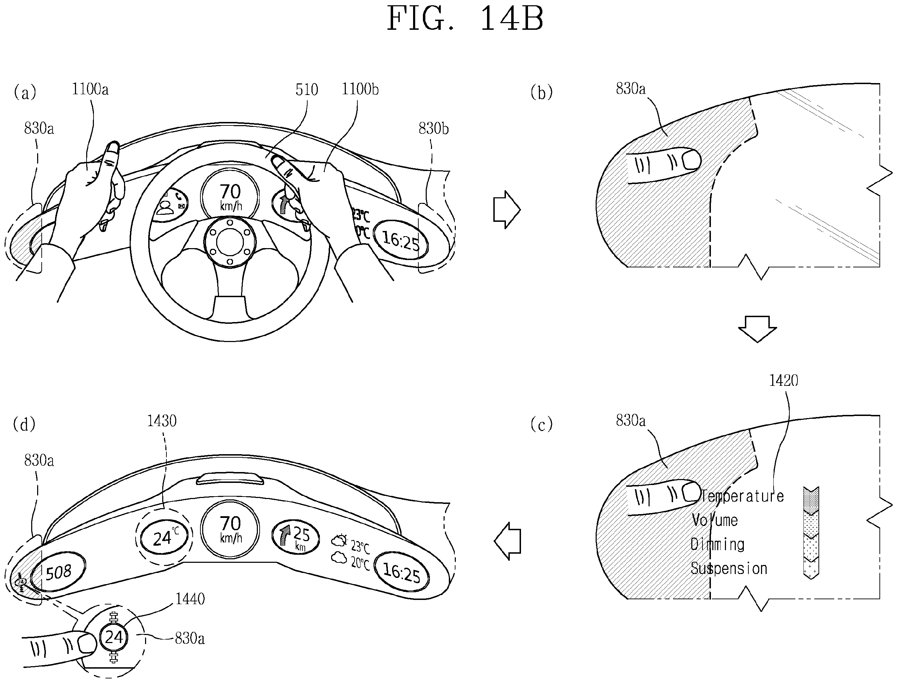

On the other hand, when the preset state is released from a state in which either hand (for example, left hand 1100a) of both hands holding the steering wheel 510 is separated from the steering wheel 510 as illustrated in FIGS. 14B(a) and 14B(b), the processor 870 of the present disclosure may active either one region of first region 830a and the second region 830b of the display unit 820 (the first region 830a when the either one hand is the left hand 1100a, and the second region 830b when the either one hand is the right hand 1100b) to enable a touch input.

Then, when a function related to the vehicle is being executed, the processor 870 may display screen information related to the function being executed in the either one region. If there is no function related to the vehicle, or when a preset type of touch input is received at either one region activated to enable the touch input, the processor 870 may display preset screen information as illustrated in FIG. 14B(c).

The preset screen information may be a menu (or a menu item) capable of controlling the vehicle (or selecting a function related to the vehicle).

Then, when a menu item 1420 linked to a first function related to the vehicle is selected from the preset screen information, the processor 870 may execute the first function related to the vehicle. In this case, as illustrated in FIG. 14B(d), an execution screen 1430 of the executed first function may be displayed in the main region of the display unit 820.

In addition, screen information 1440 related to the first function capable of controlling the executed first function may be displayed in either one region located in a direction of the hand released from the steering wheel 510 between the first and second regions 830a, 830b of the display unit 820 (a region activated to enable a touch input, for example, the first region 830a).

The processor 870 may control (manipulate) a first function related to the vehicle based on a touch input received at the either one region in a state in which the screen information 1440 is displayed.

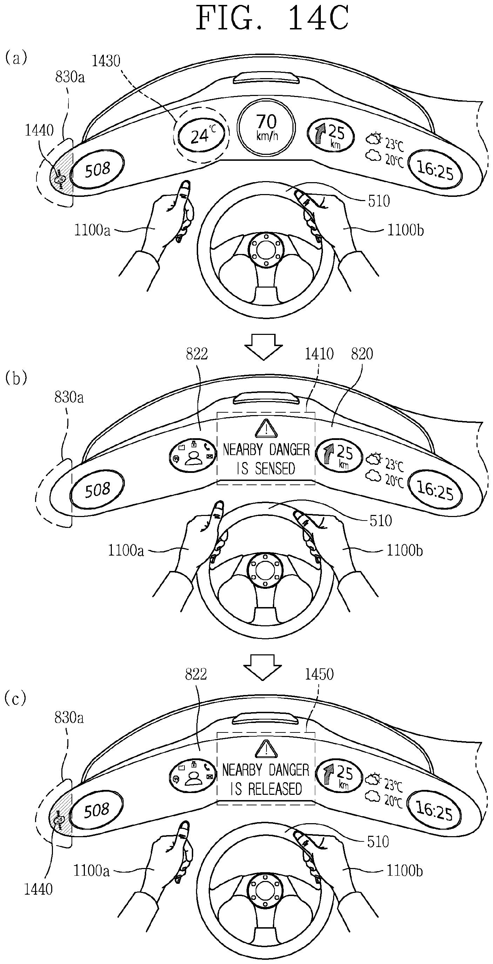

Meanwhile, as illustrated in FIG. 14C(a), the preset state may be sensed through the sensing unit 810 while controlling a function related to the vehicle through a region activated to enable the touch input.

In this case, as illustrated in FIG. 14C(b), the processor 870 may not display screen information related to the function being displayed in the either one region (the first region 830a when the either one hand released from the steering wheel is the left hand 1100a, the second region 830b when the either one hand is the right hand 1100a). In addition, the processor 870 may switch the either one region from an active region to an inactive state to disable a touch input.

Furthermore, the processor 870 may display notification information 1410 (notification information indicating that a touch input is disabled in the first and second regions 830a, 830b or notification information for guiding the steering wheel to be held with both hands) on the display unit 820 (for example, a main region of the display unit 820) on the display unit 820 (for example, the main region of the display unit 820).

Then, as illustrated in FIG. 14C(c), when the preset state is released (in other words, when the driving state of the vehicle is not in the preset state), the processor 870 may redisplay screen information 1440 (or screen information related to the function that has been displayed but is not displayed or screen information related to a function that is being most recently manipulated) related to the function in a region (the first region 830a in case of the left hand 1100a and the second region 830b in case of the right hand 1100b) corresponding to the position (direction) of either one hand separated from the steering wheel 510 between the first region 830a and the second region 830b of the display unit 820.

Furthermore, the processor 870 may display information 1450 indicating that the preset state has been released (or notification information indicating that a touch input to either one of the first and second regions is enabled) on the display unit 820 (for example, the main region of the display unit 820).

Through the foregoing configuration, the present disclosure may provide a new user interface capable of not displaying screen information related to a function (deactivating a region activated to enable a touch input) when a vehicle enters a preset state while manipulating a function related to the vehicle with a hand released from the steering wheel, and continuously controlling (manipulating) the function related to the vehicle being manipulated when the preset state is released.

Furthermore, the present disclosure may provide a vehicle control method capable of manipulating a function related to a vehicle without executing a function related to the vehicle again through an additional manipulation when a preset state is released even when the manipulation of the function related to the vehicle is interrupted by the driving state of the vehicle entering the preset state.

Hereinafter, a more specific control method for controlling the display unit using a hand released from the steering wheel placed according to the present disclosure will be described in detail with reference to the accompanying drawings.

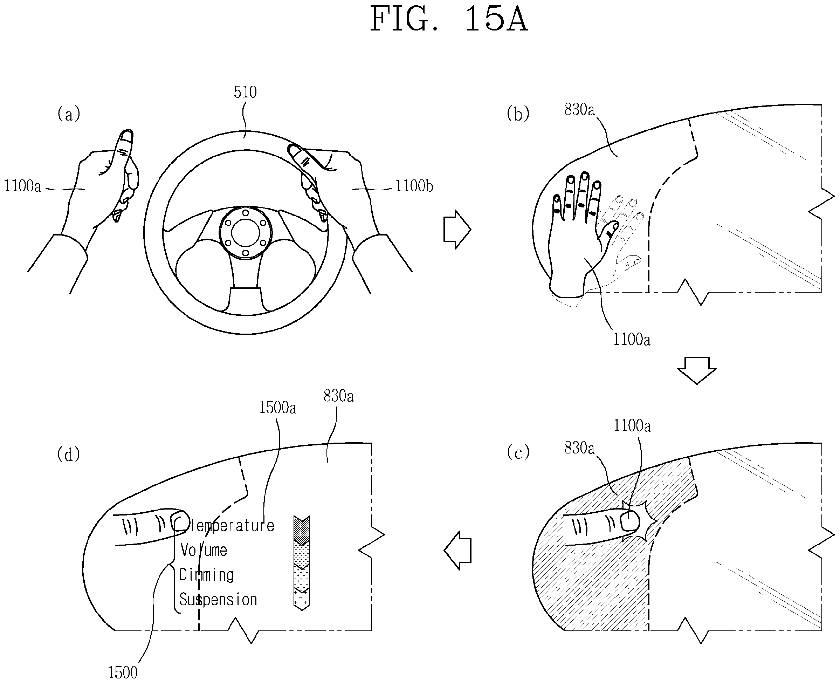

As illustrated in FIG. 15A(a), when it is sensed that either one of both hands holding the steering wheel 510 is separated therefrom, the processor 870 may activate either one region (the first region 830a when the either one hand is the left hand 1100a or the second region 830b when the either one hand is the right hand 1100b) corresponding to a position of the separated either one hand between the first region 830a and the second region 830b of the display unit 820 to enable a touch input.

On the other hand, the processor 870 may activate the either one region to enable a touch input based on whether a preset condition is satisfied subsequent to separating either one hand from the steering wheel 520.

For example, the processor 870 may activate the either one region to enable a touch input based on whether a predetermined time has passed from a time point when either one of the both hands is detached (separated) from the steering wheel 510. The predetermined time may be determined or changed by user's setting.

For another example, as illustrated in FIG. 15A(b), the processor 870 may activate the either one region to enable a touch input based on whether either one hand (for example, left hand 1100a) away from the steering wheel 510 takes a preset gesture in the either one region (the first region 830a when the either one hand is the left hand 1100a).

Here, the preset gesture may include, for example, a hovering gesture in which a hand is spaced and maintained a predetermined distance from the either one region, a gesture of grabbing the hand, a gesture of repeatedly moving the hand in a left-right (or top-down or forward-backward) direction, a gesture of knocking the either one region a predetermined number of times, or the like. The preset gesture may include any kind of gesture taken by the user.

Through the foregoing configuration, the present disclosure may provide a new user interface capable of activating one region of the display unit to enable a touch input based on releasing the steering wheel or activating the one region to enable a touch input based on whether a predetermined time has passed or a preset gesture is applied so as to determine an optimized touch time point according to the user's driving habits.

As illustrated in FIG. 15A(d), the processor 870 may display preset screen information 1500a in either one region (for example, the first region 830a when the left hand is separated from the steering wheel) based on whether the either one region between the first region and the second region of the display unit 820 is activated to enable a touch input).

At this time, the processor 870 may activate the either one region to enable a touch input, and then, as illustrated in FIG. 15A(c), may display the preset screen information 1500a in the either one region based on a preset type of touch input to the either one region by the separated either one hand.

The preset screen information may be a menu (or a menu item) capable of controlling the vehicle (or selecting a function related to the vehicle).

The preset type of touch input is a touch for displaying preset screen information in the activated either one region, and may include various types of touches. For example, the various types of touches may include a short (or tap) touch, a long touch, a double touch, a multi touch, a drag touch, a flick touch, a pinch-in touch, a pinch-out touch, a swipe touch, a hovering touch, and the like.

Hereinafter, the various types of touches will be described in more detail.

A short (or tap) touch may be a touch in which a touch subject (for example, a finger, a stylus pen, etc.) is in contact with one region of the display unit 820 (or a touch is applied) and then released within a predetermined period of time. For example, the short (or tap) touch may be a touch in which a touch subject is in contact with the touch screen for a short period of time like a single click of mouse.

A long touch may be a touch in which a touch subject is in contact with one region of the display unit 820 and then maintained for more than a predetermined period of time. For example, the long touch may be a touch in which a touch is applied to one region of the display unit 820 by a touch subject and then the touch is maintained for more than a predetermined period of time. More specifically, the long touch may be a touch in which the touch is maintained at one position on the touch screen for a predetermined period of time and then released therefrom. Furthermore, the long touch may be understood as a touch corresponding to a touch-and-hold operation in which the contact state of a touch subject is maintained on one region of the display unit 820 for more than a predetermined period of time.

A double touch may be a touch in which the short touch is consecutively applied to one region of the display unit 820 at least twice within a predetermined period of time.

A predetermined period of time described in the short touch, long touch and double touch may be determined by user's setting

A multi touch may be a touch being applied to at least two contact positions on one region of the display unit 820 at substantially the same time point.

A drag touch may be a touch in which a contact started from a first position of one region of the display unit 820 is consecutively applied on the touch screen along one direction and then the contact is released from a second position different from the first position.

Specifically, the drag touch may be a touch applied to one position of one region of the display unit 820 by a touch subject being consecutively extended while being maintained on one region of the display unit 820 and then released from a position different from said one position.

Furthermore, the drag touch may denote a touch in which the touch is applied to one position of one region of the display unit 820 and then consecutively extended from the touch.

A flick touch may be a touch in which the drag touch is applied within a predetermined period of time. Specifically, the flick touch may be a touch in which a touch subject applying the drag touch is released from one region of the display unit 820 within a predetermined period of time. In other words, the flick touch may be understood as a drag touch applied at a speed above a predetermined speed.

A swipe touch may be a drag touch applied in a straight line.

A pinch-in touch may be a touch in which at least one of a first and a second touch applied to different two positions (separate two positions) on one region of the display unit 820 is extended in a direction closer to each other. For example, the pinch-in touch may be a touch implemented by an operation of decreasing a distance between two fingers in a state that the fingers are in contact with separate two positions, respectively, on one region of the display unit 820.

A pinch-out touch may be a touch in which at least one of a first and a second touch applied to different two positions (separate two positions) on one region of the display unit 820 is extended in a direction away from each other. For example, the pinch-out touch may be a touch implemented by an operation of increasing (extending) a distance between two fingers in a state that the fingers are in contact with separate two positions, respectively, on one region of the display unit 820.

A hovering touch may be a touch corresponding to the operation of a touch subject in a space away from one region of the display unit 820 while the touch subject is not in contact with one region of the display unit 820, and for an example, may be a proximity touch. For example, the hovering touch may be a touch corresponding to an operation in which the touch subject is maintained at one position separated from one region of the display unit 820 for more than a predetermined period of time.

According to the present disclosure, it will be described that the preset type of touch is a drag touch, for example. However, the foregoing various types of touches will be analogically applied to the preset type of touch in the same or similar manner.

In other words, the preset screen information 1500 may be displayed in either one region of the display unit 820 based on whether the either one region is activated to enable a touch input, and then a preset type of touch input is applied to the either one region.

The preset screen information may include a plurality of menu items.

For an example, each of the plurality of menu items may be linked to a function related to the vehicle, and linked to a driving mode of the vehicle in addition to the foregoing functions.

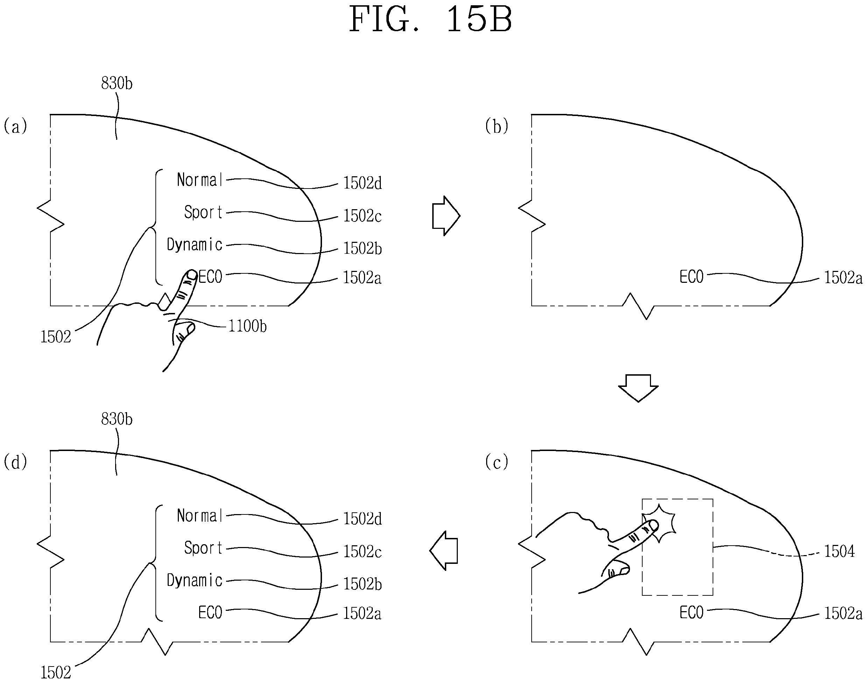

The driving mode of the vehicle may include a general driving mode, a comfortable driving mode, a sport mode, a dynamic mode, an ECO mode, and the like, as illustrated in FIG. 15B(a).

In one region of the display unit 820 (the second region 830b when the right hand 1100b is separated from the steering wheel 510), for an example, preset screen information 1502 including a menu item 1502d linked to a function of entering a general driving mode, a menu item 1502c linked to a function of entering a sport mode, a menu item 1502b linked to a function of entering a dynamic mode, a menu item 1502a linked to a function of entering an ECO mode, and the like may be displayed.

When any one menu item (for example, 1502a) is selected from a plurality of menu items displayed in the either one region as illustrated in FIG. 15B(a), the processor 870 may not display the remaining unselected menu items 1502b, 1502c, 1502d as illustrated in FIG. 15B(b).

Then, when a preset type of touch input (for example, a short touch input) is received at a portion 1504 in which the remaining menu items 1502b, 1502c, 1502d have been displayed by either one hand separated from the steering wheel 510 as illustrated in FIG. 15B(c), the processor 870 may redisplay the remaining menu items 1502b, 1502c, 1502d in the portion 1504.

When a function corresponding to the selected menu item is executed (when entering a specific driving mode in case where the function is the specific driving mode), the processor 870 may not display the remaining unselected menu items. Furthermore, when a preset type of touch input is received at the remaining menu items 1502b, 1502c, 1502d, the processor 870 may suspend a function being executed, and display all the preset screen information (i.e., a plurality of menu items) in the either one region.

Through this, the present disclosure may effectively inform the user of a function being executed (or a driving mode that has entered), and provide a user interface capable of easily releasing a function being executed (or a driving mode that has entered).

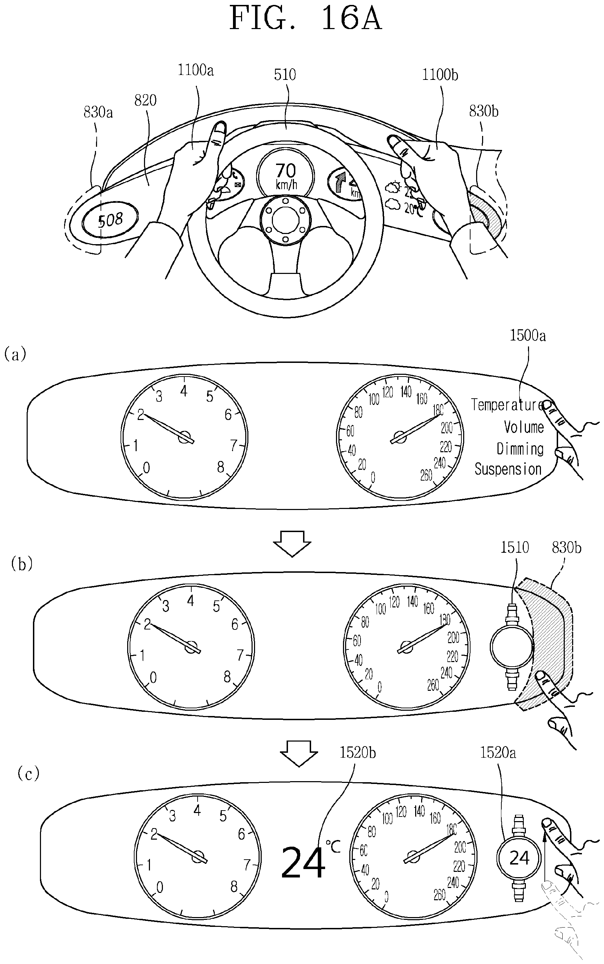

Various embodiments of a function related to the vehicle of the present disclosure will be described in detail in FIGS. 16A through 16F with reference to the accompanying drawings.

First, referring to 16A through 16F, an example in which either one of both hands (right hand 1100b) holding the steering wheel 510 is separated from the steering wheel 510 as illustrated in FIG. 16A, and accordingly, either one region (second region 830b) between the first region 830a and the second region 830b of the display unit 820 is activated to enable a touch input will be described.

As illustrated in FIG. 16A(a), one of the functions related to the vehicle may be a function of adjusting (setting) a temperature inside the vehicle.

For example, when a menu item 1500a linked to a function of controlling a temperature inside the vehicle is selected from the either one region 830b, the processor 870 may display screen information (for example, control bar 1510) related to the function in the either one region 830b.

Then, the processor 870 may set a temperature inside the vehicle based on a touch input (for example, a drag touch) applied to the either one region 830b with the either one hand 1100b.

In this case, temperature information 1520a, 1520b set by the touch input may be displayed in the screen information related to the function and the main region of the display unit 820 as illustrated in FIG. 16A(c).

Furthermore, the function related to the vehicle may include a function of adjusting a volume of sound output from the vehicle or a function of adjusting a display brightness of the display unit 820. As described above, the processor 870 may control such functions by analogically applying the method described in FIG. 16A in the same or similar manner.

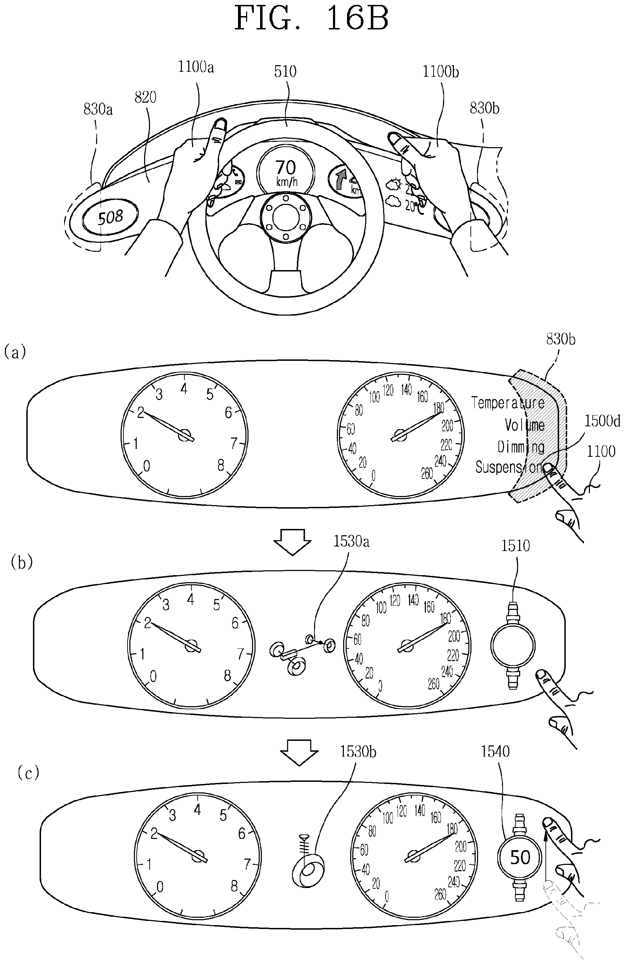

As illustrated in FIG. 16B(a), one of the functions related to the vehicle may be a function of controlling the suspension of the vehicle.

For example, when a menu item 1500d linked to a function of controlling the suspension of the vehicle is selected from the either one region 830b, the processor 870 may display screen information (for example, control bar 1510) related to the function in the either one region 830b. Furthermore, the processor 870 may display information 1530a for guiding the user to select any one of a plurality of suspensions of the vehicle on the display unit 820 (for example, main region).

Then, the processor 870 may select any one of a plurality of suspensions of the vehicle based on a touch input applied to the either one region 830b with the either one hand 1100b. Information 1530b indicating the selected suspension may be displayed on the display unit 820.

In addition, as illustrated in FIG. 16B(c), the processor 870 vary a strength of the selected suspension based on a touch input applied to the either one region 830b with the either one hand 1100b. At this time, information 1540 on the strength of the suspension may be displayed in a part of the screen information 1510 related to the function.

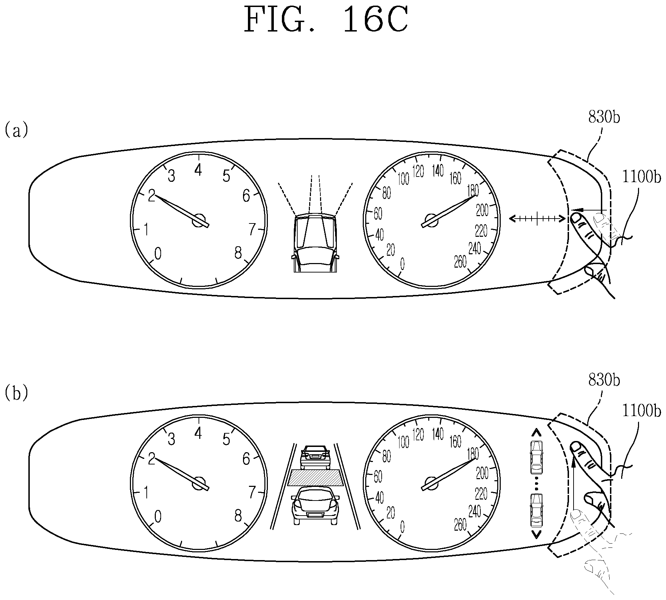

As illustrated in FIG. 16C(a), one of the functions related to the vehicle may be a function of varying a light irradiation direction (or light irradiation angle) of a headlamp provided in the vehicle.

In this case, as illustrated in FIG. 16C(a), when the function of varying the light irradiation direction of the headlamp is carried out, screen information related to the function for guiding to vary the light irradiation direction may be displayed in the either one region 830b.

The processor 870 may vary the light irradiation direction of the headlamp based on a touch input (for example, a drag touch) applied to the either one region 830b in a state in which screen information related to the function is displayed.

Furthermore, as illustrated in FIG. 16C(b), one of the functions related to the vehicle may be a function for setting an inter-vehicle distance in which an AEB (Automatic Emergency Braking) function of the vehicle is carried out among the ADAS functions.

In this case, as illustrated in FIG. 16C(b), when a function of setting an inter-vehicle distance at which the AEB function is carried out is executed, in any one of the areas 830b, information related to the function for guiding the setting of inter-vehicle distance to a preceding vehicle for performing the AEB function may be displayed in the either one region 830b.

An inter-vehicle distance at which the AEB function is carried out may be set based on a touch input (for example, a drag touch) applied to the either one region 830b in a state in which screen information related to the function is displayed.

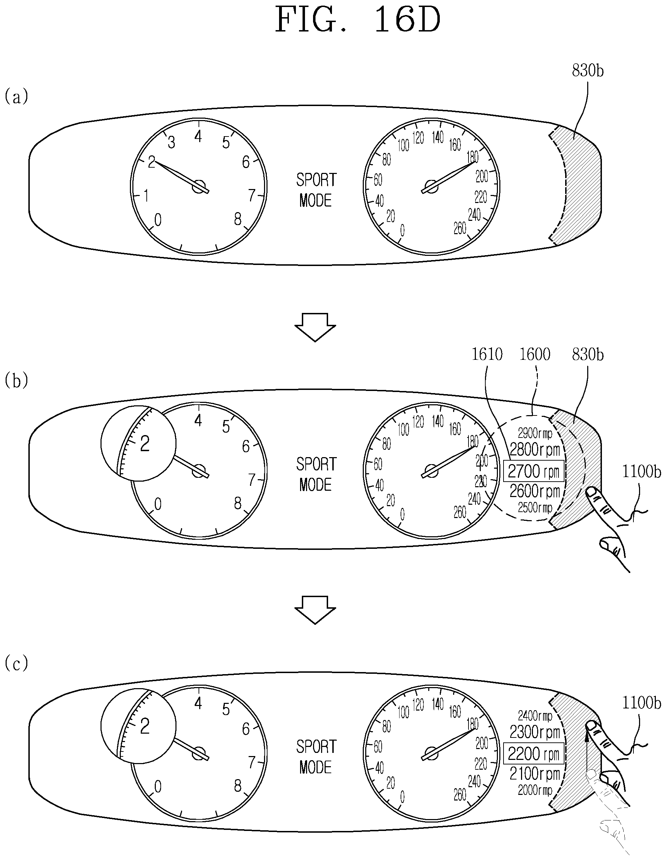

As illustrated in FIG. 16D(a), one of the functions related to the vehicle may be a function for limiting a RPM in a specific driving mode of the vehicle.

For example, when the vehicle enters a sport mode and then the function of limiting RPM is executed, screen information 1600 related to the function capable of selecting the RPM to be limited may be displayed in the either one region 830b as illustrated in FIG. 16D(b).

The screen information 1600 related to the function may include a graphic object 1610 for indicating the selected RPM.

When a drag touch is applied to the either one region 830b in a state in which screen information 1600 related to the function is displayed as illustrated in FIG. 16D(c), the processor 870 may scroll the preset screen information 1600 to change RPM included in the graphic object 1610.

Then, when a specific RPM is selected in the graphical object 1610, the processor 870 may control the vehicle not to exceed the selected specific RPM.

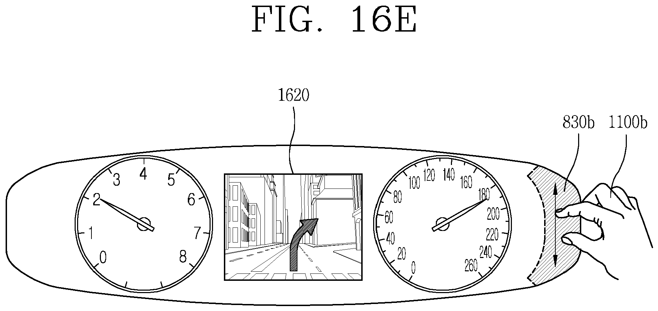

As illustrated in FIG. 16E, one of functions related to the vehicle may be a function of controlling route information (or turn-by-turn information).

As illustrated in FIG. 16E, a preset type of touch input (for example, a pinch-out touch) is applied to the either one region 830b in a state in which the route information 1620 is displayed on the display unit 820, the processor 870 may enlarge (or zoom in) the displayed route information 1620.

When a preset type of touch input (for example, a pinch-in touch) is applied to the either one region 830b, the processor 870 may reduce (or zoom out) the displayed route information 1620.

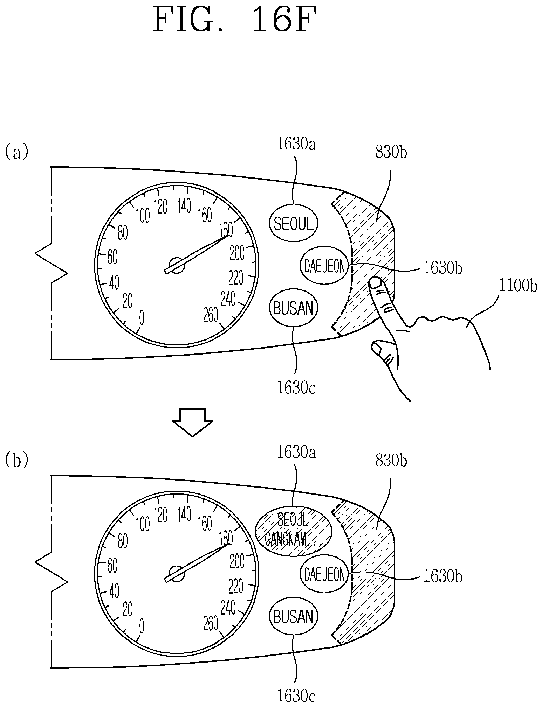

As illustrated in FIG. 16F(a), one of functions related to the vehicle may be a function for setting a destination.

When the function is executed, graphic objects 1630a, 1630b, 1630c indicating information related to the destination may be displayed on the display unit 820. The information related to the destination may be, for example, destination history information searched by the user.

The processor 870 may designate any one (for example, 1630a) of information related to the destination based on a touch input to either one region 830b in a state in which the information related to the destination is displayed. As illustrated in FIG. 16F(b), the information related to the designated destination may further display the detailed information.

Then, when a preset type of touch input (for example, a short touch or a long touch) is applied to the either one region 830b in a state in which the information 1630a related to any one of the destinations is designated, the processor 870 may determine (produce) route information from a current position of the vehicle to a destination corresponding to information related to the designated destination.

The determined route information may be displayed on the display unit 820.

In addition, the present disclosure may provide a user interface capable of controlling all functions related to the vehicle through one region of the display unit corresponding to the position of a hand separated from the steering wheel.

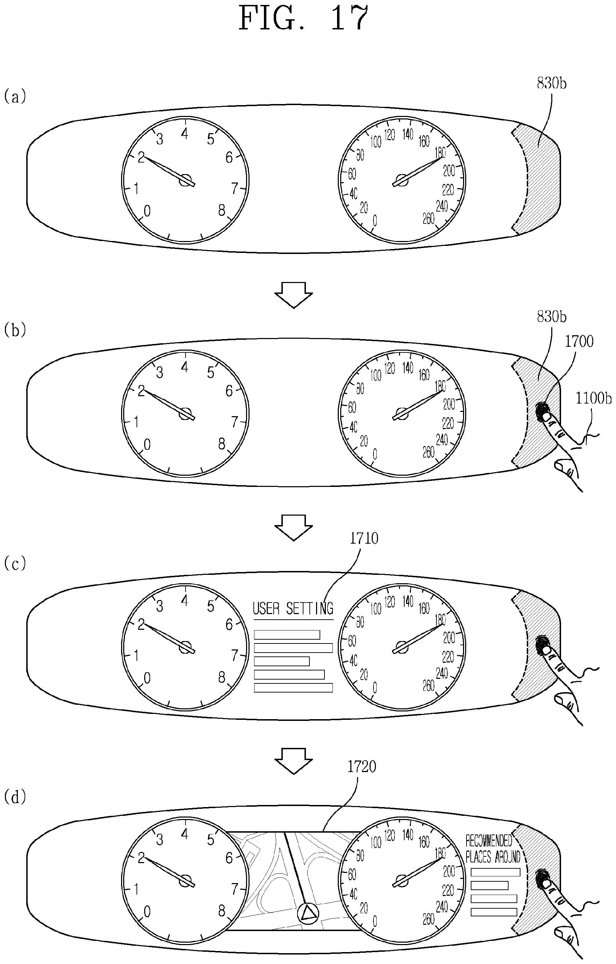

On the other hand, referring to FIG. 17, a fingerprint recognition sensor may be provided in the first region 830a and/or the second region 830b of the display unit 820 of the present disclosure.

Specifically, at least a part of the first region 830a included in the display portion 820 and at least a part of the second region 830b may be provided with a fingerprint recognition sensor.

For an example, the fingerprint recognition sensor may be provided to overlap with a touch panel provided on the display unit 820.

The fingerprint recognition sensor may be in an inactive state when the touch panel is in an inactive state.

When either one of both hands (for example, right hand 1100b) holding the steering wheel 510 is separated from the steering wheel 510, the processor 870 may activate a region (the first region 830a when the either one hand is the left hand 1100a and the second region 830b when the either one hand is the right hand 1100b) corresponding to the position of the separated either one hand (right hand) between the first region and the second region of the display unit 820 to enable touch input.

When either one of the first and second regions 830a, 830b is activated to enable a touch input, the processor 870 may switch the fingerprint recognition sensor provided in the activated either one region from an inactive state to an active state.

Likewise, activating the fingerprint recognition sensor may denote applying power (a current or a voltage) to the fingerprint recognition sensor to recognize a fingerprint formed on a finger that applies a touch through the fingerprint recognition sensor.

The processor 870 may activate the fingerprint recognition sensor provided in the either one region 830b when the either one region 830b is activated to enable a touch input as illustrated in FIG. 17B.

Then, the processor 870 may recognize a fingerprint 1700 formed on a finger (for example, a finger of the right hand when the right hand is separated from the steering wheel) that applies a touch input to the either one region 830b.

Then, the processor 870 may perform fingerprint authentication using the recognized fingerprint 1700.

Then, when the fingerprint authentication is successful through the fingerprint recognition sensor that has been switched to an active state, the processor 870 may execute a function linked to be executed when the fingerprint authentication is successful as illustrated in FIG. 17C. At this time, execution screens 1710, 1720 of the function may be displayed on the display unit 820.

For an example, the function linked to be executed when the fingerprint authentication is successful may be a user setting function 1710 or may include a function determined to require security of personal information or a function set by a user such as recent destination information 1720 of navigation, and the like.

Furthermore, the processor 870 may control the linked function based on a touch input received at either one region activated to enable a touch input.

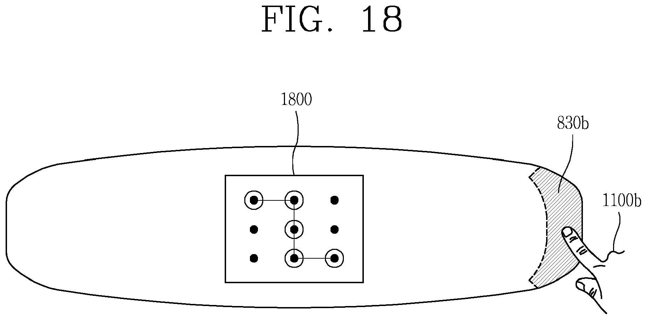

In addition, the processor 870 of the present disclosure may input a lock pattern 1800 through either one region 830b activated to enable a touch input as illustrated in FIG. 18.

When a touch input (or touch pattern) set to release the lock pattern 1800 is input through the either one region 830b, the processor 870 may perform a function (a function determined to require security of information or a function set by a user).

According to an embodiment of the present disclosure, there are one or more following effects.

First, the present disclosure may provide a new user interface capable of setting a touchable region of the display unit in a different manner according to a type of hand placed on the steering wheel.

Second, the present disclosure may provide a display unit (cluster) extended to left and right sides of the steering wheel and protruded toward a driver, thereby providing a vehicle control device and a vehicle capable of touching the cluster even while driving the vehicle.

Third, the present disclosure may provide a new vehicle control method capable of continuously controlling a function being carried out in a manner other than a touch through a cluster using a touchable cluster.

Effects to be achieved in the present disclosure will not be limited to the foregoing effects, and other effects which are not mentioned will become apparent from the following description by a person skilled in the art to which the present disclosure belongs.

The vehicle control device 800 described above may be included in the vehicle 100.

Furthermore, the foregoing operation or control method of the vehicle control device 800 may be analogically applied to the operation or control method of the vehicle 100 (or the controller 170) in the same or similar manner.

For example, a control method of the vehicle 100 (or a control method of the vehicle control device 800) may include the steps of sensing that either one of both hands holding a steering wheel is separated from the steering wheel, and activating either one of a first region and a second region on the display unit to allow a touch input based on either one hand being separated from the steering wheel.

Each of the above steps may be carried out not only by the vehicle control device 800 but also by the controller 170 provided in the vehicle 100.

In addition, all of the functions, configurations or control methods carried out by the foregoing vehicle control device 800 may be carried out by the controller 170 provided in the vehicle 100. In other words, all of the control methods described in this specification may be applied to a control method of the vehicle or a control method of the control device.

The foregoing present disclosure may be implemented as codes readable by a computer on a medium written by the program. The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include a processor or controller.

## Claims

1. A control device for a vehicle, the control device comprising:
a display unit (820) including a first region and a second region, wherein the first region is different from the second region;
a sensing unit (810) configured to sense contact, and lack of contact, of first and second hands with a steering wheel (510) of the vehicle; and
a processor (870) configured to switch one of the first region or the second region of the display unit (820) from an inactive state to an active state to permit touch input,
wherein the first region corresponds to the first hand and the second region corresponds to the second hand, **characterized by** the processor being configured to switch one of the first region or the second region of the display unit from an inactive state to an active state to permit touch input, in response to sensing the lack of contact with the steering wheel of a corresponding one of the first and second hands.

2. The control device of claim 1, wherein the display unit (820) further includes a main region that is located behind the steering wheel (510), such that the steering wheel (510) is located between the main region and a driver's seat of the vehicle; and wherein
the first region extends from a left side of the main region in a leftward direction; and
the second region extends from a right side of the main region in rightward direction.

3. The control device of claim 2, wherein the main region, the first region and the second region of the display unit (820) form a curved surface, and wherein
the first region and the second region are each angled inward relative to a center axis of the steering wheel (510).

4. The control device of any one of claims 1 to 3, wherein the first hand is a left hand of a person and the second hand is a right hand of the person, and wherein the processor (870) is further configured to:
switch the first region from the inactive state to the active state to permit touch input to the first region, when the lack of contact with the steering wheel (510) of the first hand is sensed by the sensing unit (810); and
switch the second region from the inactive state to the active state to permit touch input to the second region, when the lack of contact with the steering wheel (510) of the second hand is sensed by the sensing unit (810).

5. The control device of any one of claims 1 to 4, further comprising:
a first touch panel superimposed on at least a portion of the first region of the display unit (820); and
a second touch panel superimposed on at least a portion of the second region of the display unit (820), and
wherein the processor (870) is further configured to switch either of the first touch panel or the second touch panel from the inactive state to the active state according to which of the first hand or the second hand has the lack of contact with the steering wheel (510) as sensed by the sensing unit (810).

6. The control device of any one of claims 1 to 5, wherein the processor (870) is further configured to:
cause the display unit (820) to display screen information of a function related to the vehicle in one of the first region or the second region, in response to sensing the lack of contact with the steering wheel (510) of a corresponding one of the first hand or the second hand.

7. The control device of claim 6, wherein the processor (870) is further configured to control the function related to the vehicle based on a touch input to the display unit (820) received with regard to the displayed screen information.

8. The control device of any one of claims 1 to 7, wherein the processor (870) is further configured to:
identify whether a driving state of the vehicle is in a preset state; and
maintain the first region and the second region in the inactive state in which touch input is disabled to each of the first region and the second region, when the sensing unit (810) senses the lack of contact with the steering wheel (510) of any of the first or second hands and the vehicle is identified as being in the preset state.

9. The control device of claim 8, wherein the processor (870) is further configured to:
cause the display unit (820) to display notification information notifying of the preset state when the sensing unit (810) senses the lack of contact with the steering wheel (510) of any of the first or second hands and the vehicle is identified as being in the preset state.

10. The control device of claim 9, wherein the processor (870) is further configured to activate either of the first region or the second region to permit the touch input when the preset state is released.

11. The control device of any one of claims 1 to 10, wherein the processor (870) is further configured to perform the switch of the one of the first region or the second region of the display unit (820) from the inactive state to the active state based on whether a predetermined time elapses from a time when the lack of contact with the steering wheel (510) is sensed.

12. The control device of any one of claims 1 to 11, wherein the processor (870) is further configured to perform the switch of the one of the first region or the second region of the display unit (820) from the inactive state to the active state based on whether either of the first hand or the second hand makes a preset gesture with regard to a respective one of the first region or the second region.

13. The control device of any one of claims 1 to 12, wherein the processor (870) is further configured to cause the display unit (820) to display screen information in the activated one of the first region or the second region.

14. The control device of claim 13, wherein the screen information is based on a preset type of touch input received at the activated one of the first region or the second region, wherein the touch input is received after the first region or the second region is switched to the active state.

15. The control device of claim 13 or 14, wherein the screen information comprises a plurality of menu items, wherein the processor (870) is further configured to cause the display unit (820) to stop the displaying of unselected menu items of the plurality of menu items when one menu item of the plurality of menu items is selected.

## Patentansprüche

1. Steuervorrichtung für ein Fahrzeug, wobei die Steuervorrichtung aufweist:
eine Anzeigeeinheit (820) mit einem ersten Bereich und einem zweiten Bereich, wobei sich der erste Bereich vom zweiten Bereich unterscheidet;
eine Erfassungseinheit (810), die so konfiguriert ist, dass sie Kontakt und fehlenden Kontakt einer ersten und einer zweiten Hand mit einem Lenkrad (510) des Fahrzeugs erfasst; und
einen Prozessor (870), der so konfiguriert ist, dass er den ersten Bereich oder den zweiten Bereich der Anzeigeeinheit (820) aus einem inaktiven Zustand in einen aktiven Zustand umschaltet, um Berührungseingaben zu ermöglichen,
wobei der erste Bereich der ersten Hand entspricht und der zweite Bereich der zweiten Hand entspricht,
**dadurch gekennzeichnet, dass** der Prozessor so konfiguriert ist, dass er den ersten Bereich oder den zweiten Bereich der Anzeigeeinheit aus einem inaktiven Zustand in einen aktiven Zustand, um Berührungseingaben zu ermöglichen, als Reaktion auf das Erfassen des fehlenden Kontakts einer entsprechenden der ersten und zweiten Hand mit dem Lenkrad umschaltet.

2. Steuervorrichtung nach Anspruch 1, wobei die Anzeigeeinheit (820) ferner einen Hauptbereich aufweist, der hinter dem Lenkrad (510) liegt, so dass das Lenkrad (510) zwischen dem Hauptbereich und einem Fahrersitz des Fahrzeugs liegt; und wobei
sich der erste Bereich von einer linken Seite des Hauptbereichs in Linksrichtung erstreckt; und
sich der zweite Bereich von einer rechten Seite des Hauptbereichs in Rechtsrichtung erstreckt.

3. Steuervorrichtung nach Anspruch 2, wobei der Hauptbereich, der erste Bereich und der zweite Bereich der Anzeigeeinheit (820) eine gekrümmte Oberfläche bilden und wobei
der erste Bereich und der zweite Bereich relativ zu einer Mittelachse des Lenkrads (510) jeweils nach innen abgewinkelt sind.

4. Steuervorrichtung nach einem der Ansprüche 1 bis 3, wobei die erste Hand eine linke Hand einer Person ist und die zweite Hand eine rechte Hand der Person ist und wobei der Prozessor (870) ferner so konfiguriert ist, dass er:
den ersten Bereich aus dem inaktiven Zustand in den aktiven Zustand umschaltet, um Berührungseingaben im ersten Bereich zu ermöglichen, wenn der fehlende Kontakt der ersten Hand mit dem Lenkrad (510) durch die Erfassungseinheit (810) erfasst wird; und
den zweiten Bereich aus dem inaktiven Zustand in den aktiven Zustand umschaltet, um Berührungseingaben im zweiten Bereich zu ermöglichen, wenn der fehlende Kontakt der zweiten Hand mit dem Lenkrad (510) durch die Erfassungseinheit (810) erfasst wird.

5. Steuervorrichtung nach einem der Ansprüche 1 bis 4, die ferner aufweist:
ein erstes Touchpanel, das über mindestens einem Abschnitt des ersten Bereichs der Anzeigeeinheit (820) liegt; und
ein zweites Touchpanel, das über mindestens einem Abschnitt des zweiten Bereichs der Anzeigeeinheit (820) liegt, und
wobei der Prozessor (870) ferner so konfiguriert ist, dass er das erste Touchpanel oder das zweite Touchpanel aus dem inaktiven Zustand in den aktiven Zustand in Übereinstimmung damit umschaltet, welche der ersten Hand oder zweiten Hand den fehlenden Kontakt mit dem Lenkrad (510) in der Erfassung durch die Erfassungseinheit (810) hat.

6. Steuervorrichtung nach einem der Ansprüche 1 bis 5, wobei der Prozessor (870) ferner so konfiguriert ist, dass er:
veranlasst, dass die Anzeigeeinheit (820) Bildschirminformationen über eine fahrzeugbezogene Funktion im ersten Bereich oder zweiten Bereich als Reaktion auf das Erfassen des fehlenden Kontakts einer entsprechenden der ersten Hand oder zweiten Hand mit dem Lenkrad (510) anzeigt.

7. Steuervorrichtung nach Anspruch 6, wobei der Prozessor (870) ferner so konfiguriert ist, dass er die fahrzeugbezogene Funktion auf der Grundlage einer Berührungseingabe auf der Anzeigeeinheit (820) steuert, die im Hinblick auf die angezeigten Bildschirminformationen empfangen wird.

8. Steuervorrichtung nach einem der Ansprüche 1 bis 7, wobei der Prozessor (870) ferner so konfiguriert ist, dass er:
identifiziert, ob sich ein Fahrzustand des Fahrzeugs in einem voreingestellten Zustand befindet; und
den ersten Bereich und den zweiten Bereich im inaktiven Zustand hält, in dem Berührungseingaben jeweils im ersten Bereich und zweiten Bereich gesperrt sind, wenn die Erfassungseinheit (810) den fehlenden Kontakt der ersten und/oder zweiten Hand mit dem Lenkrad (510) erfasst und das Fahrzeug als im voreingestellten Zustand befindlich identifiziert wird.

9. Steuervorrichtung nach Anspruch 8, wobei der Prozessor (870) ferner so konfiguriert ist, dass er:
veranlasst, dass die Anzeigeeinheit (820) Meldeinformationen anzeigt, die den voreingestellten Zustand melden, wenn die Erfassungseinheit (810) den fehlenden Kontakt der ersten und/oder zweiten Hand mit dem Lenkrad (510) erfasst und das Fahrzeug als im voreingestellten Zustand befindlich identifiziert wird.

10. Steuervorrichtung nach Anspruch 9, wobei der Prozessor (870) ferner so konfiguriert ist, dass er den ersten Bereich oder den zweiten Bereich aktiviert, um die Berührungseingabe zu ermöglichen, wenn der voreingestellte Zustand aufgehoben ist.

11. Steuervorrichtung nach einem der Ansprüche 1 bis 10, wobei der Prozessor (870) ferner so konfiguriert ist, dass er die Umschaltung des ersten Bereichs oder des zweiten Bereichs der Anzeigeeinheit (820) aus dem inaktiven Zustand in den aktiven Zustand auf der Grundlage dessen durchführt, ob eine vorbestimmte Zeit ab einer Zeit abläuft, zu der der fehlende Kontakt mit dem Lenkrad (510) erfasst wird.

12. Steuervorrichtung nach einem der Ansprüche 1 bis 11, wobei der Prozessor (870) ferner so konfiguriert ist, dass er die Umschaltung des ersten Bereichs oder des zweiten Bereichs der Anzeigeeinheit (820) aus dem inaktiven Zustand in den aktiven Zustand auf der Grundlage dessen durchführt, ob die erste Hand oder die zweite Hand eine voreingestellte Geste im Hinblick auf einen jeweiligen des ersten Bereichs oder des zweiten Bereichs vollführt.

13. Steuervorrichtung nach einem der Ansprüche 1 bis 12, wobei der Prozessor (870) ferner so konfiguriert ist, dass er veranlasst, dass die Anzeigeeinheit (820) Bildschirminformationen im aktivierten des ersten Bereichs oder des zweiten Bereichs anzeigt.

14. Steuervorrichtung nach Anspruch 13, wobei die Bildschirminformationen auf einer voreingestellten Art von Berührungseingabe beruhen, die im aktivierten des ersten Bereichs oder des zweiten Bereichs empfangen wird, wobei die Berührungseingabe empfangen wird, nachdem der erste Bereich oder der zweite Bereich in den aktiven Zustand umgeschaltet wird.

15. Steuervorrichtung nach Anspruch 13 oder 14, wobei die Bildschirminformationen mehrere Menüeinträge aufweisen, wobei der Prozessor (870) ferner so konfiguriert ist, dass er veranlasst, dass die Anzeigeeinheit (820) das Anzeigen nicht ausgewählter Menüeinträge der mehreren Menüeinträge stoppt, wenn ein Menüeintrag der mehreren Menüeinträge ausgewählt wird.

## Revendications

1. Dispositif de commande pour un véhicule, le dispositif de commande comprenant :
une unité d'affichage (820) incluant une première région et une seconde région, dans lequel la première région est différente de la seconde région ;
une unité de détection (810) configurée pour détecter un contact, et une absence de contact, de première et seconde mains avec un volant (510) du véhicule ; et
un processeur (870) configuré pour commuter l'une de la première région ou de la seconde région de l'unité d'affichage (820) d'un état inactif à un état actif pour permettre une entrée tactile,
dans lequel la première région correspond à la première main et la seconde région correspond à la seconde main, **caractérisé en ce que** le processeur est configuré pour commuter l'une de la première région ou de la seconde région de l'unité d'affichage d'un état inactif à un état actif pour permettre une entrée tactile, en réponse à la détection de l'absence de contact avec le volant d'une des première et seconde mains correspondante.

2. Dispositif de commande selon la revendication 1, dans lequel l'unité d'affichage (820) inclut en outre une région principale qui se situe derrière le volant (510), de telle sorte que le volant (510) se situe entre la région principale et un siège d'un conducteur du véhicule ; et dans lequel
la première région s'étend depuis un côté gauche de la région principale dans une direction vers la gauche ; et
la seconde région s'étend depuis un côté droit de la région principale dans une direction vers la droite.

3. Dispositif de commande selon la revendication 2, dans lequel la région principale,
la première région et la seconde région de l'unité d'affichage (820) forment une surface incurvée, et dans lequel
la première région et la seconde région sont chacune inclinées vers l'intérieur par rapport à un axe central du volant (510).

4. Dispositif de commande selon l'une quelconque des revendications 1 à 3, dans lequel la première main est une main gauche d'une personne et la seconde main est une main droite de la personne, et dans lequel le processeur (870) est en outre configuré pour :
commuter la première région de l'état inactif à l'état actif pour permettre une entrée tactile dans la première région, quand l'absence de contact avec le volant (510) de la première main est détectée par l'unité de détection (810) ; et
commuter la seconde région de l'état inactif à l'état actif pour permettre une entrée tactile dans la seconde région, quand l'absence de contact avec le volant (510) de la seconde main est détectée par l'unité de détection (810).

5. Dispositif de commande selon l'une quelconque des revendications 1 à 4, comprenant en outre :
un premier panneau tactile superposé sur au moins une partie de la première région de l'unité d'affichage (820) ; et
un second panneau tactile superposé sur au moins une partie de la seconde région de l'unité d'affichage (820), et
dans lequel le processeur (870) est en outre configuré pour commuter l'un ou l'autre du premier panneau tactile ou du second panneau tactile de l'état inactif à l'état actif selon laquelle de la première main ou de la seconde main présente l'absence de contact avec le volant (510) telle que détectée par l'unité de détection (810).

6. Dispositif de commande selon l'une quelconque des revendications 1 à 5, dans lequel le processeur (870) est en outre configuré pour :
amener l'unité d'affichage (820) à afficher des informations d'écran d'une fonction liée au véhicule dans l'une de la première région ou de la seconde région, en réponse à la détection de l'absence de contact avec le volant (510) d'une correspondante de la première main ou de la seconde main.

7. Dispositif de commande selon la revendication 6, dans lequel le processeur (870) est en outre configuré pour commander la fonction liée au véhicule sur la base d'une entrée tactile dans l'unité d'affichage (820) reçue en ce qui concerne les informations d'écran affichées.

8. Dispositif de commande selon l'une quelconque des revendications 1 à 7, dans lequel le processeur (870) est en outre configuré pour :
identifier si un état de conduite du véhicule est dans un état prédéfini ; et
maintenir la première région et la seconde région dans l'état inactif dans lequel une entrée tactile est désactivée vers chacune de la première région et de la seconde région, quand l'unité de détection (810) détecte l'absence de contact avec le volant (510) de l'une quelconque de la première ou de la seconde main et le véhicule est identifié comme étant dans l'état prédéfini.

9. Dispositif de commande selon la revendication 8, dans lequel le processeur (870) est en outre configuré pour :
amener l'unité d'affichage (820) à afficher des informations de notification notifiant l'état prédéfini quand l'unité de détection (810) détecte l'absence de contact avec le volant (510) de l'une quelconque de la première ou de la seconde main et le véhicule est identifié comme étant dans l'état prédéfini.

10. Dispositif de commande selon la revendication 9, dans lequel le processeur (870) est en outre configuré pour activer l'une ou l'autre de la première région ou de la seconde région pour permettre l'entrée tactile quand l'état prédéfini est relâché.

11. Dispositif de commande selon l'une quelconque des revendications 1 à 10, dans lequel le processeur (870) est en outre configuré pour effectuer la commutation de l'une de la première région ou de la seconde région de l'unité d'affichage (820) de l'état inactif à l'état actif selon qu'un temps prédéterminé s'est écoulé depuis un moment où l'absence de contact avec le volant (510) est détectée.

12. Dispositif de commande selon l'une quelconque des revendications 1 à 11, dans lequel le processeur (870) est en outre configuré pour effectuer la commutation de l'une de la première région ou de la seconde région de l'unité d'affichage (820) de l'état inactif à l'état actif selon que l'une ou l'autre de la première main ou de la seconde main effectue un geste prédéfini vis-à-vis de l'une de la première région ou de la seconde région respective.

13. Dispositif de commande selon l'une quelconque des revendications 1 à 12, dans lequel le processeur (870) est en outre configuré pour amener l'unité d'affichage (820) à afficher des informations d'écran dans la région activée parmi la première région ou la seconde région.

14. Dispositif de commande selon la revendication 13, dans lequel les informations d'écran sont basées sur un type prédéfini d'entrée tactile reçue au niveau de la région activée parmi la première région ou la seconde région, dans lequel l'entrée tactile est reçue après que la première région ou la seconde région est commutée dans l'état actif.

15. Dispositif de commande selon la revendication 13 ou 14, dans lequel les informations d'écran comprennent une pluralité d'éléments de menu, dans lequel le processeur (870) est en outre configuré pour amener l'unité d'affichage (820) à arrêter l'affichage d'éléments de menu non sélectionnés de la pluralité d'éléments de menu quand un élément de menu de la pluralité d'éléments de menu est sélectionné.
